(19) Europäisches Patentamt
European Patent Office
Office européen des brevets

(11) EP 1 636 028 B1

(12) **EUROPEAN PATENT SPECIFICATION**

(45) Date of publication and mention of the grant of the patent:
**07.11.2012 Bulletin 2012/45**

(21) Application number: **04801933.5**

(22) Date of filing: **11.02.2004**

(51) Int Cl.:
***B32B 27/12*** *(2006.01)* ***A62D 5/00*** *(2006.01)*

(86) International application number:
**PCT/US2004/004145**

(87) International publication number:
**WO 2005/021100 (10.03.2005 Gazette 2005/10)**

(54) **CHEMICAL PROTECTIVE ARTICLES OF APPAREL AND ENCLOSURES**

CHEMIKALIENSCHUTZKLEIDUNGS- ODER UMHÜLLUNGSARTIKEL

ARTICLES VESTIMENTAIRES ET HOUSSES PROTEGEANT CONTRE LES SUBSTANCES CHIMIQUES

(84) Designated Contracting States:
**AT BE BG CH CY CZ DE DK EE ES FI FR GB GR HU IE IT LI LU MC NL PT RO SE SI SK TR**

(30) Priority: **20.06.2003 US 601085**

(43) Date of publication of application:
**22.03.2006 Bulletin 2006/12**

(73) Proprietor: **Gore Enterprise Holdings, Inc.**
**Newark, DE 19714-9206 (US)**

(72) Inventors:
- **JAIN, Mukesh**
**Newark, DE 19702 (US)**
- **WU, Huey, Shen**
**Neward, DE 19711 (US)**

(74) Representative: **Shanks, Andrew et al**
**Marks & Clerk LLP**
**Aurora**
**120 Bothwell Street**
**Glasgow**
**G2 7JS (GB)**

(56) References cited:
**US-A- 4 515 761**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 636 028 B1

## Description

FIELD OF THE INVENTION

The present invention is directed to chemical protective coverings. More specifically, the invention relates to materials and articles that can be used to provide protection to persons or contents from noxious or harmful chemicals. The chemical protective coverings provided in accordance with the invention are particularly suitable for applications such as articles of apparel and enclosures including clothing, hoods, tents, sleeping bags, casualty bags, shelters, and the like.

BACKGROUND OF THE INVENTION

Chemical protective coverings are intended to prevent harmful levels of chemicals existing in an external environment from reaching the user or wearer or contents of the coverings.

Chemical protective clothing is worn when the surrounding environment may present a potential hazard of exposing an individual to harmful or noxious chemicals. Historically, users of protective clothing have traded protection for comfort due to material limitations. That is, those offering more chemical protection were unacceptably uncomfortable, and those that were of satisfactory comfort did not offer acceptable protection.

For example, one approach that was known in the art, interposed material generally referred to as "impermeable" between the wearer and the hazardous environment. Suitable impermeable materials will exhibit low permeability to harmful chemicals and are pliable enough to be employed in a garment or other article of clothing application. An example includes a glove utilizing butyl rubber as the chemical barrier.

Although these materials may provide adequate protection from harmful chemicals by significantly restricting the passage of such agents, they also characteristically prevent the passage of water vapor. A material that to a great extent prevents the transmission of water vapor is termed non-breathable.

Non-breathable materials retard the human body's process of heat dissipation normally achieved through the evaporation of perspiration. Without significant transmission of water vapor, or breathability, prolonged use of non-breathable materials can result in intolerable discomfort and even death to a person wearing coverings made from these materials. High levels of moisture generated by the wearer build up within the protective covering, followed by heat stress resulting from lack of evaporative cooling. This problematic characteristic of non-breathable protective covering materials makes them unsuitable for anything more than very short duration usage or limited areas of coverage.

Conversely, many materials having significantly high water vapor transmission rates, including many woven textiles or nonwoven polyolefin materials, will not provide desired levels of protection against harmful or noxious chemicals. Therefore, while they may offer satisfactory comfort, they do not provide satisfactory protection. Various efforts have been made to address the trade-off between protection and comfort.

For example, it is known in the art to interpose absorptive materials between the wearer and a contaminated environment such as described in U.S. Patent No. 4,510,193 by Blucher et al. Absorptive chemical protective systems work by adsorbing hazardous liquids and vapors into sorbents, thus inhibiting them from reaching that which the systems are intended to protect. Sorbents are limited by a finite capacity to adsorb chemicals, and an indiscriminant adsorption of chemical species for which no protection is necessary. Thus, the available capacity for the adsorption of the chemicals against which they were intended to provide protection is limited. Moreover, adsorptive systems will begin to adsorb various chemical contaminants present in the atmosphere upon exposure, reducing their available capacity over time. This limits the duration of use and the storage life of such materials.

The finite capacity and indiscriminate adsorption characteristics necessitates the use of relatively large quantities of sorptive elements within a chemical protective covering to achieve adequate levels of protection. This can result in thick, heavy barrier systems that can have high resistances to heat and moisture transfer and can impose undesirable physiological stresses on the wearer. Thus, adsorptive systems are also restricted by a trade-off between protection and comfort. Furthermore, increased bulk and weight are also undesired characteristics for the packaging, storage, handling, and transportation of these materials.

A more preferred approach to creating chemical protective coverings that provides satisfactory comfort and protection relies on the use of a continuous polymer layer that facilitates the transmission of desired chemical species while restricting the passage of undesired chemical species. It would be desirable for a polymer material to have preferential permeability towards water vapor relative to noxious or harmful chemicals. Particularly for articles of chemical protective clothing, the permeability to water vapor should be substantially greater than the permeability to noxious or harmful chemicals. This can provide the basis for protective coverings that will be comfortable while at the same time being highly protective. Moreover, where these materials are not dependent upon sorption of chemicals, they do not have the limitations intrinsic to adsorptive systems. Unlike adsorptive systems, which rely upon a significant mass and thickness of appropriate materials to provide adequate and sustained protection, materials free of these limitations can

be made extremely thin and lightweight. This facilitates the creation of much less bulky and lighter protective garments and accessories.

In addition to providing comfortable protection with reduced weight and bulk, chemical protective coverings made from materials with preferential permeability towards water vapor relative to noxious or harmful chemicals should maintain sufficient protection under conditions of normal use and care. During normal use and care, the chemical protective coverings are likely to be exposed to common chemicals and contaminants such as fuels, lubricants, and body oils, as well as differing, and frequently varying, environmental conditions such as temperature, relative humidity, ultra violet (UV) radiation, and washing and drying. Therefore, it is desirable that the performance of preferentially permeable material does not significantly degrade as a result of this exposure, and that the material retains protective properties upon exposure to common chemicals, contaminants, liquid water, detergents, UV radiation and high temperatures. One exemplary intended use for chemical protective coverings is fire fighting. The typical fire fighting environment places the fire fighter in contact with considerable quantities of liquid water, extreme temperatures, and common chemicals such as fire fighting foam. Further, the fire fighter may encounter noxious chemicals from which protection is needed without resulting in undue heat stress. Therefore, in a fire fighting application it is desirable that the chemical protective covering provide protection against noxious chemicals while allowing high water vapor transmission during and after exposure to high temperatures, liquid water, and common chemicals.

There have been several attempts to provide chemical protective coverings that are comfortable yet provide protection from noxious chemicals. For example, films using cellulose-based polymers as taught in U.S. Patent No. 5,743,775 by Baurmeister, as well as polyimide polymers as taught in U.S. Patent No. 5,824,405 by White have been employed to meet the above need. Wu in U.S. Patent No. 5,391,426 and Maples in U.S. Patent No. 6,395,383 teach the use of a polyalkyleneimine based material to provide chemical protective coverings with good water vapor transmission and protection against noxious chemicals. However, the inherent properties of the polymers employed in these material systems can be affected by environmental conditions and exposure to common chemicals and environmental contaminants. In particular, the level of permeation of noxious chemicals and water vapor through these polymers may change in response to changes in temperature and relative humidity and upon exposure to common chemicals and environmental contaminants like body oils, lubricants, and fuels.

Further, in U.S. Patent Nos. 4,515,761 and 4,518,650 to E. I. Du Pont de Nemours and Company, protective garments made of materials based on aliphatic fluorinated ion exchange polymer are taught which are permeable to water vapor but substantially impermeable to most organic substances. However, fluorinated ion exchange polymers are costly to produce, prohibiting the use of these materials in protective apparel applications.

Consequently, it would be desirable to have materials that have preferential permeability toward water vapor relative to noxious or harmful chemicals, and therefore simultaneously reduce the exposure of a wearer to noxious chemicals while allowing a high rate of water vapor transmission under conditions of normal use and care, and that are economical for use in protective garments. In particular, these materials should maintain protective properties upon exposure to high temperatures, liquid water, and common chemicals and environmental contaminants such as fuels, lubricants, and body oils.

It is known that engineering thermoplastic polymers have high thermal stability, good mechanical properties, high glass transition temperatures, and exceptional resistance to hydrolysis and oxidation (Encyclopedia of Polymer Science and Engineering published by John Wiley and Sons, New York, NY and Modern Plastics Encyclopedia by McGraw Hill, Hightstown, NJ). These materials generally produce films that are both tough and ductile, and have properties rendering the materials desirable for use in a diverse set of applications including adhesives, films and coatings for the automotive and electronic industries. Representative engineering thermoplastic polymers include polyamides, polyesters, polyacrylates, poly(acrylene ethers), poly(acrylene sulfones), polyimides, and polyetherimides. In many instances, engineering thermoplastic polymers contain aromatic rings as substituents or as part of the main polymer backbone, which can be readily substituted or modified to impart additional functionality for specific applications.

Polymers having aromatic groups incorporated in the polymer backbone are known to exhibit a high degree of thermal and chemical stability (Heat Resistant Polymers - Technologically Useful Materials, Critchley et al., 1983, Plenum Press, New York, NY). Moreover, when compared to certain aliphatic polymers, aromatic backbone polymers (here in after referred to as "aromatic polymers") have greater mechanical strength and maintain these properties to a greater extent after exposure to common chemicals and environmental contaminants such as fuels, lubricants, and body oils. Additionally, these aromatic polymers exhibit low permeation to a range of noxious chemicals as well as water vapor. One approach to imparting hydrophilicity to these aromatic polymers, and thereby facilitate transmission of water vapor, is to sulfonate the aromatic rings. U.S. Patent Nos. 5,013,765 and 5,362,836 teach methods to prepare sulfonated aromatic polymers for use in ultrafiltration, desalting and removal of microorganisms, and in ion exchange membranes for electrolysis cells. U.S. Patent Nos. 5,403,675 and 6,509,441 teach preparation of sulfonated aromatic polymer membranes for application in fuel cells. International publication No. WO 01/19896 A1 teaches a composite membrane for use as an ion-exchange membrane made of a sulfonated ion conductive polymer and a support material. Applications mentioned include electrochemical fuel cells, ion exhange material for chromatographic separations, gas separation

and pervaporation among others.

U.S. Patent No. 4,824,916, teaches the use of highly sulfonated polyamide and polyurea materials. The polymers are water-soluble for use as thickeners, exhibit resistance to shear degradation and have 'desirable' rheological properties. Membranes can be prepared by casting a highly sulfonated polyamide or polyurea water soluble polymer film on a porous support followed by crosslinking. When crosslinked, it is taught that that the polymers are rendered substantially water-insoluble for use as water absorbents and as membranes for pervaporation, gas separation and solvent dehydration. Water permeable garments are also mentioned as a potential use of these materials, however, because of the high degree of sulfonation, these membranes are not expected to have sufficient durability for garment applications.

Thus, there is a need for chemical protective articles of apparel and enclosures without limitations inherent in current approaches.

## SUMMARY OF THE INVENTION

The present invention is directed to protective coverings, such as articles of apparel and enclosures, capable of transmitting high amounts of moisture vapor and that can reduce exposure of a wearer to noxious chemicals, while being economical for use in protective coverings. Protective coverings of the present invention are expected to maintain protective properties upon exposure to high temperatures, liquid water, common chemicals and environmental contaminants such as fuels, lubricants, and body oils.

It has been discovered that certain sulfonated aromatic polymers can provide high moisture vapor permeation and low permeation of noxious or harmful chemicals. Chemical protective articles of apparel and enclosures of the present invention comprise sulfonated aromatic polymers designed with a particular polymer composition and specific degrees of sulfonation so as to impart preferential permeability of water vapor to noxious chemicals, and to maintain these properties after exposure to high temperatures, liquid water, and common chemicals and environmental contaminants, such as fuel, lubricants, and body oils. The amount of sulfonation in these polymers needs to be carefully controlled since a high degree of sulfonation can produce sulfonated aromatic polymers that swell excessively in the presence of water. Severe swelling can lead to the loss of mechanical strength, increase in the permeation to noxious or harmful chemicals, or result in complete dissolution of the polymer in water. Conversely, insufficient sulfonation imparts inadequate hydrophilicity to facilitate significant water vapor transmission. A determination of the amount of sulfonic acid groups in the polymer may be performed by titration with a base to determine the ion exchange capacity (IEC) of the sulfonated polymer. A higher IEC indicates a higher degree of sulfonation. Another measure of the degree of sulfonation is equivalent weight, which is 1000/IEC. As such, a higher equivalent weight indicates a lower degree of sulfonation.

One preferred chemical protective covering comprises a fabric laminate comprising at least one layer of apparel fabric and a layer comprising a sulfonated aromatic polymer. The polymer comprises at least one repeating aromatic group selected from 5, 6,or 7 membered single or fused rings having 0, 1, 2, 3, or 4 heteroatoms selected from N, O or S, and at least a portion of the aromatic groups have at least one pendant group comprising sulfonic acid, or its salt. The sulfonated aromatic polymer preferably has a sulfonic acid equivalent weight of about 200-1000 (IEC: 1.0 - 5.0 meq/g) and the layer comprising the sulfonated aromatic polymer is laminated to at least one layer of apparel fabric. The repeating aromatic groups are preferably linked by one or more linkages preferably comprising ketone, sulfone, imide and ether groups.

A further preferred embodiment of the present invention is directed to a method of reducing exposure of a person to chemicals while providing a high degree of moisture vapor transmission, comprising covering at least a portion of a person exposed to chemicals with a chemical protective covering comprising a laminate capable of transmitting moisture vapor and which has a permeation to bis-2-chloroethyl sulfide (2CES) of less than or equal to about 100 $\mu g/cm^2$ over a period of 20 hours. The protective coverings of the present invention may be formed as an article of apparel including garments such as outer wear, under wear, jackets, top, shirts, pants, gloves, foot wear, hoods and may further include enclosures such as tents, sleeping bags, casualty bags, shelters and the like.

## DETAILED DESCRIPTION OF THE FIGURES

Fig. 1 shows an example of a film of a sulfonated aromatic polymer.

Fig. 2 shows an example of a fabric laminate with a layer of apparel fabric in contact with a layer of sulfonated aromatic polymer.

Fig. 3 shows an example of a fabric laminate with two layers of apparel fabric and a sulfonated aromatic polymer that partially resides within a portion of each of the apparel fabric layers.

Fig. 4 shows an example of a composite of a non-porous substrate and a sulfonated aromatic polymer.

Fig. 5 shows an example of a composite of a closed pore substrate and a sulfonated aromatic polymer.

Fig. 6 shows an example of a composite of an open pore substrate and a sulfonated aromatic polymer.

Fig. 7 shows another example of a composite of a sulfonated aromatic polymer on a porous substrate.

Fig. 8 shows an example of a composite of a sulfonated aromatic polymer and a porous substrate wherein a portion of the polymer resides within the porous substrate.

Fig. 9 shows another example of a sulfonated aromatic polymer and a porous substrate wherein a portion of the polymer resides within the porous substrate.

Fig. 10 shows an example of a composite of a sulfonated aromatic polymer and a porous substrate wherein essentially all of the polymer resides within a portion of the porous substrate.

Fig. 11 shows another example of a composite of a sulfonated aromatic polymer and a porous substrate wherein essentially all of the polymer resides within a portion of the porous substrate.

Fig. 12 shows an example of a composite of a sulfonated aromatic polymer residing within a porous substrate and substatially filling said porous substrate.

Fig. 13 shows an example of a composite of a sulfonated aromatic polymer and a porous substrate wherein a portion of the sulfonated aromatic polymer resides within and substantially fills the porous substrate.

Fig. 14 shows an example of a composite of a sulfonated aromatic polymer and a porous substrate wherein a portion of the sulfonated aromatic polymer resides and substantially fills the porous substrate.

Fig. 15 shows an example of a composite having a sulfonated aromatic polymer between two porous substrates, wherein essentially all of the polymer resides within the substrates.

Fig. 16 shows an example of a composite having a sulfonated aromatic polymer between two porous substrates wherein portions of the polymer reside within each substrate.

Fig. 17 shows an example of a composite of a non-porous substrate, a sulfonated aromatic polymer and a porous substrate, wherein the sulfonated aromatic polymer resides within a portion of the porous substrate.

Fig. 18 shows an example of a composite having a sulfonated aromatic polymer between a porous substrate and a non-porous substrate, wherein a portion of the sulfonated aromatic polymer resides within a portion of the porous substrate.

Fig. 19 shows an example of a composite of a sulfonated aromatic polymer, a non-porous substrate and two open pore substrates wherein portions of the aromatic polymer and non porous substrate resides within one of the porous substrates.

Fig. 20 shows an example of a composite of a sulfonated aromatic polymer, a non-porous substrate and two open pore substrates wherein portions or the sulfonated aromatic polymer resides within each of the porous substrates and portions of the non porous substrate resides within one of the porous substrates.

Fig. 21 shows an example of a of a multi-layered fabric laminate having two apparel fabric layers and a composite of a sulfonated aromatic polymer between two porous substrates and residing within a portion of the substrates, wherein the porous layers are adhered to the apparel fabric layers by discontinuously applied adhesive.

## DETAILED DESCRIPTION OF THE INVENTION

The present invention is directed to chemical protective coverings, such as articles of apparel and enclosures, comprising a laminate which is capable of transmitting a high amount of moisture vapor and which reduces the exposure of a person or/and contents to noxious or harmful chemicals. Chemical protective coverings are meant to include articles having a laminate material that substantially restricts the passage of noxious or harmful chemicals, and which are intended to be interposed between those harmful chemicals and that which they are meant to protect. The moisture vapor transmission rate (MVTR) of the laminate should be at least about 600 $g/m^2$/day, preferably greater than or equal to about 1000 $g/m^2$/day, and more preferably greater than or equal to about 2000 $g/m^2$/day. It is preferred that the laminate has a permeability to bis-2-chloroethyl sulfide (2CES) of less than or equal to about 100 $\mu g/cm^2$ over a 20 hour period when tested substantially in accordance with the test method described herein for 2CES, more preferably the permeability should be less than or equal to about 30 $\mu g/cm^2$ over a 20 hour period, further preferred of less than or equal to about 20 $\mu g/cm^2$ over a 20 hour period, and most preferably less than or equal to about 10 $\mu g/cm^2$ over a 20 hour period. Laminates of the present invention also preferably have a resistance to permeation by pinacolyl methylphosphono fluoridate (PMF) of less than or equal to about 30 $\mu g/cm^2$ over a 20 hour period, more preferably of less than or equal to about 10 $\mu g/cm^2$ over a 20 hour period, and further preferred of less than or equal to about 5 $\mu g/cm^2$ over a 20 hour period, when tested substantially according to the test method described under the "Test Methods" section herein.

The chemical protective covering comprises a laminate comprising a layer comprising at least a sulfonated aromatic polymer and at least one additional layer such as a membrane, film or fabric. Preferably the laminate comprises at least two additional layers of membrane, film or fabric. A preferred laminate is a fabric laminate where at least one layer is apparel fabric. By apparel fabric it is meant a fabric that is sufficiently flexible, pliable and durable for use in articles of apparel or enclosures such as garments, tents, sleeping bags, casualty bags, and the like. Apparel fabrics

include knit, woven or non-woven fabrics comprising synthetic or natural fibers of polymers selected from poly(aliphatic amide), poly(aromatic amide), polyester, polyolefin, wool, cellulose based fibers such as cotton, rayon, linen, cellulose acetate and other modified cellulose, polyurethane, acrylics, modacrylics, a blend thereof, or a blend comprising any of the above. Preferred fabrics are selected from cotton, poly (aliphatic amide), poly (aromatic amide), polyester, polyurethanes and blends thereof.

The fabric laminate comprises at least one layer of apparel fabric, and preferably comprises at least two layers of apparel fabric of the same or different fabric. In a preferred embodiment, the fabric laminate comprises at least two layers of apparel fabric, where one layer is a layer of apparel face fabric and another layer is a layer of apparel backing fabric. The apparel face fabric is generally the outermost layer of the fabric laminate, which is exposed to the elements. The apparel face fabric can be any fabric, but is preferably a woven fabric made of poly(aliphatic amide), poly (aromatic amide), polyester, acrylic, cotton, wool and the like. The apparel face fabric may also be treated to render it hydrophobic and/or oleophobic. The apparel backing fabric is an inner layer and may be, for example, a knit, woven or non-woven, and may optionally be treated to enhance moisture wicking properties or to impart hydrophobic and/or oleophobic properties. Apparel fabric layers may be additionally treated with suitable materials so as to impart properties such as flame resistance, anti static properties, ultra violet radiation resistance, controlled infra red (I. R.) reflectance, camouflage, and the like.

Additionally, the laminate comprises a layer comprising at least a sulfonated aromatic polymer. By the term aromatic polymer, it is meant a polymer having aromatic groups in the polymer backbone, or main chain. Preferred sulfonated aromatic polymers have a molecular weight of at least about 10,000. The sulfonated aromatic polymer of the present invention comprises at least one repeating aromatic group selected from 5, 6,or 7 membered single or fused rings having 0, 1, 2, 3 or 4 heteroatoms selected from N, O or S, and at least a portion of the aromatic groups have at least one pendant group comprising sulfonic acid, or its salt. Suitable salts include but are not limited to those formed with ammonia, amines (primary, secondary or tertiary), or with mono or multivalent metal ions such as $Na^+$, $K^+$, $Ca^{++}$, $Fe^{+++}$, $Ba^{++}$, $Cu^{++}$, $Zr^{++++}$, and $Al^{+++}$. Sulfonic acid groups may be attached directly to the aromatic ring, or may be attached to a substituent on the aromatic ring. Preferred are polymers having a sulfonic acid equivalent weight of about 200 - 1000 (IEC: 1.0 - 5.0 meq/g). More preferably, the sulfonated aromatic polymer has a sulfonic acid equivalent weight of about 400 - 800 (IEC: 1.25 - 2.5 meq/g). Aromatic groups may be independently substituted or unsubstituted, and where substituted, may have one or more substitutions selected from $C_{1-8}$ alkyl and haloalkyl, aryl, ketone, hydroxyl, halogen, amine, cyanide, nitrile, sulfide, carbonyl, $C_{1-8}$ ester and $C_{1-8}$ alkoxyl groups.

The sulfonated aromatic polymer may further comprise linkages where at least a portion of the aromatic groups may be linked by one or more linkages comprising ketone, sulfone, ether, sulfide, urethane, amide, imide, and ester groups, and substituted or unsubstituted saturated or unsaturated $C_{1-5}$ alkylene groups, substituted or unsubstituted phosphine groups, and phosphine oxide groups, and where substituted, substituents are selected from halogens such as fluorine or chlorine, aryl, $C_{1-5}$ alkyl, and $C_{1-5}$ haloalkyl. Preferred linkages are sulfone, ether, imide and ketone linkages.

Preferred sulfonated aromatic polymers include but are not limited to sulfonated polysulfone, sulfonated polyether sulfone, sulfonated polyether ketone, sulfonated biphenyl sulfone, sulfonated polyphthalazinone ether ketone, sulfonated polyphenylene oxide, sulfonated polyimide, sulfonated polybenzimidazole, and blends thereof. Other aromatic polymers which may be suitable for use in the present invention include sulfonated forms of polyetherether sulfone (PEES), polyarylether sulfone (PAS), polyphenylene sulfone (PPSU), polyether ketone (PEK), polyether ketone ketone (PEKK), polyether ether ketone ketone (PEEKK), polyether ketone-ether ketone-ketone (PEKEKK), poly(bisbenzoxazole) (PBO), poly(benzo(bis-diazole)-1,4-phenylene)) (PBI), polyaramid (PAR), poly(benzo(bis-thiazole)-1,4-phenylene (PBT), polyphenylene sulfoxide (PPSO), polyphenylene sulfide (PPS), polyparaphenylene (PPP), poly(phenylquinoxaline) (PPQ), poly(trifluoro-methyl-bis(phthalimide)-phenylene), and poly(triphenylphosphine oxide sulfide-phenylsulfone-sulfide). Sulfonated aromatic polymers may comprise a blend of more than one sulfonated polymer or a blend of sulfonated and non-sulfonated polymers, such as those listed above. Where compatible, blends may also comprise other non sulfonated polymers such as poly(vinylidene fluoride). Blends are useful for tailoring mechanical properties of polymer films (in both dry and wet state), moisture vapor permeation rates, chemical permeation, swelling, dimensional changes and the like.

The sulfonated aromatic polymer optionally may be crosslinked. It is believed that the swelling of hydrated sulfonated aromatic polymers may be controlled by crosslinking the polymer chains in addition to controlling swelling by controlling the amount of sulfonation. The polymers may be crosslinked by covalent or ionic bonding, and crosslinking may be accomplished by means such as heating, radiation, electron beam or reaction with crosslinking agents. Crosslinking agents include, for example, a multi-functional chemical species such as a divalent or multivalent ion, such as Ca or Fe ion or difunctional or multifunctional organic compounds such as diamines, and the like.

Methods for making the sulfonated aromatic polymers used in the present invention are known and may be found, for example, in U.S. Patent Nos. 5,013,765, 5,362,836, and 6,451,921, and in the examples of the present invention. Suitable sulfonated aromatic polymers may be made for example, by the sulfonation of aromatic polymers, or by polymerizing sulfonated monomers to form sulfonated aromatic polymers for use in the present invention.

The layer comprising the sulfonated aromatic polymer may further comprise at least one additional component such as fillers or plasticizers, for example, fumed silica or plasticizers may be used to improve mechanical properties and/or to reduce swelling, or titanium dioxide for ultra violet radiation stability.

The sulfonated aromatic polymer is preferably in the form of a film (Fig. 1 at 20), or a solution or dispersion. The layer comprising the aromatic polymer may form a distinct or continuous layer of the laminate or fabric laminate (Fig. 2). Alternately, the layer comprising the sulfonated aromatic polymer may partially or fully reside in one or more layers of the laminate, such as a layer of apparel fabric 25 and 25a (Fig. 3). The layer comprising the aromatic polymer may provide additional benefits to a laminate or fabric laminate such as waterproofness. Waterproofness is generally defined as having a water entry pressure greater than about 5 kPa water pressure.

Sulfonated aromatic polymers may form a flexible and pliable composite layer when used in combination with one or more substrates, such as membranes or films. Thus, the layer comprising the sulfonated aromatic polymer may further comprise a composite. A further embodiment of the present invention is therefore directed to a chemical protective covering comprising a fabric laminate comprising at least one layer of apparel fabric and a composite comprising at least one substrate and a sulfonated aromatic polymer. The composite is laminated to at least one layer of apparel fabric to form the fabric laminate. Suitable composite substrates provide protection and/or support for the sulfonated aromatic polymer and include porous, microporous, and non-porous substrates, provided that where the substrate is non-porous, the desired moisture vapor transmission properties of the fabric laminate are maintained. Porous or microporous substrates, may be open or closed pore structures and are formed from materials such as polysulfones, polyether sulfones, polyetherketones, polyurethane, polyamides, polyimides, polyolefins, porous polytetrafluoroethylene, such as expanded polytetrafluoroethylene (ePTFE), and the like.

Where the substrate is an open pore substrate, at least a portion of the sulfonated aromatic polymer may fill the porous substrate, partially or fully. Without wishing to be bound by theory, it is believed that swelling of the sulfonated aromatic polymer may be further controlled by containment within the pores of porous or microporous substrates. Thus, composites wherein the sulfonated aromatic polymer resides fully or partially within the pores of an open pore substrate may provide greater protective properties in high humidity or in the presence of water. Porous or microporous membranes that enhance waterproofness and are resistant to wind are preferred, and ePTFE is particularly preferred. The average pore size of the preferred ePTFE membranes ranges from about 0.03 to 100 um and the preferred porosity is in the range of 50-95%. Preferred non-porous substrates include polyether-ester, polyurethanes, polyether-amide, polyvinyl alcohol, cellulose acetate and polyimides.

The composite of at least one substrate and a sulfonated aromatic polymer can be arranged in multiple configurations. Examples of possible composite configurations include, but are not limited to the examples illustrated in Figs. 4-21. Fig. 4, Fig. 5, and Fig. 6 depict composites where the sulfonated aromatic polymer 20 resides essentially on the surfaces of non-porous 21 and porous substrates including a closed pore substrate 22 and an open pore substrates 23, respectively, and may form a continuous layer. For purposes of the instant invention, the term porous is meant to include both porous and microporous. Fig. 7 depicts another embodiment where the sulfonated aromatic polymer 20 resides essentially on the surface of an open pore substrate 23.

Figs. 8 and 9 each show a composite where a portion of the sulfonated aromatic polymer 20 partially fills a porous substrate 23. Figs. 10 and 11 each show a composite where essentially all of the sulfonated aromatic polymer 20 is contained within a porous substrate 23, partially filling the porous substrate. Fig. 12 depicts a porous substrate 23 that is substantially filled with the sulfonated aromatic polymer 20. Figs. 13 and 14 each show an example of a porous substrate 23 which is substantially filled by a portion of the sulfonated aromatic polymer 20.

If desired, additional substrates can be added, as shown in Figs. 15 - 19. Figs. 15 and 16 each show embodiments of composites where the sulfonated aromatic polymer 20 is contained between porous substrates 23 and 23a. Fig. 15 depicts an embodiment where the porous substrates 23 and 23a are essentially brought into contact with one another, and the sulfonated aromatic polymer 20 residing completely within the substrates, a portion of the sulfonated aromatic polymer within each substrate. Fig. 16 depicts an embodiment where a portion of the sulfonated aromatic polymer 20 resides in each of the porous substrates 23 and 23a, with the substrates separated by a distinct layer of the sulfonated aromatic polymer that does not reside within the substrates. Figs. 17 and 18 show examples of composites where the sulfonated aromatic polymer 20 is contained between a porous substrate 23 and a non-porous substrate 21, where at least a portion of the sulfonated aromatic polymer resides within the porous substrate. Fig. 17 shows an example where the two substrate layers are contacting each other and essentially all of the sulfonated aromatic polymer 20 resides within the open pore substrate 23, and Fig. 18 shows an example where only a portion of the sulfonated aromatic polymer 20 resides within the porous substrate 23. It is clear that closed pore or open pore substrates could also be envisioned in place of the non-porous substrates in each of the examples. Fig. 19 shows a composite of a sulfonated aromatic polymer 20, non-porous polymer 21 and two open pore substrates 23 and 23a wherein portions of the sulfonated aromatic polymer and non-porous polymer resides within each of the porous substrates. Fig. 20 shows a composite of the sulfonated aromatic polymer 20, non-porous polymer 21 and two open pore substrates 23 and 23a wherein portions of the sulfonated aromatic polymer resides within each of the porous substrates and portions of non-porous polymer resides within one

of the porous substrates.

It can be seen that the sulfonated aromatic polymer may coat or cover a porous or non-porous substrate, essentially residing on the surface of the substrate as a distinct or continuous layer. In the case of open pore substrates, the sulfonated aromatic polymer may additionally be imbibed or impregnated into a substrate or substrates, partially filling or substantially filling a porous a substrate through its entire thickness. The sulfonated aromatic polymer may reside completely within the porous substrates, or only a portion of the sulfonated aromatic polymer may reside within the porous substrate, and the remaining sulfonated aromatic polymer resides on the surface of the substrate as a distinct layer. It should be understood that the figures are illustrative of only some of the embodiments of the present invention, but do not show all the possible embodiments of the invention.

One preferred embodiment comprises a chemical protective covering, such as an article of apparel or an enclosure, comprising a fabric laminate comprising at least one layer of apparel fabric and a composite comprising a sulfonated aromatic polymer and at least one porous substrate is shown in Fig. 21. In this construction the sulfonated aromatic polymer 20 resides within two porous substrates 23 and 23a. The composite is laminated by discontinuously applied adhesive 24 and 24a to apparel face fabric 25 and apparel backing fabric 25a. The adhesive is shown as discontinuous dots, but could be in the form of a grid, lines, and the like. The adhesive could also be applied continuously, provided sufficient moisture vapor transmission properties are maintained.

A preferred chemical protective article of apparel or enclosure for use in reducing exposure to chemicals comprises a fabric laminate comprising at least one apparel fabric layer of polyamide, cotton or polyester fabric which has been laminated to a composite of an ePTFE substrate and a sulfonated aromatic polymer that has been selected from sulfonated polyether sulfone, sulfonated polyether ketone, sulfonated biphenyl sulfone, and sulfonated polyphthalazinone ether ketone. Preferably, at least a portion of the sulfonated aromatic polymer resides within the ePTFE substrate, partially or substantially filling the substrate to form a composite. A more preferred composite further comprises at least two additional substrates including at least one non-porous substrate and at least one additional ePTFE membrane. In one preferred embodiment, at least a portion of the sulfonated aromatic polymer resides partially or fully within two ePTFE substrates. In another preferred embodiment, a portion of the non-porous substrate is in contact with the sulfonated aromatic polymer, and a portion of the non-porous substrate partially resides in the additional ePTFE substrate (Fig. 19). The composite is then laminated to at least one layer of apparel fabric.

In another embodiment of the present invention, a chemical protective covering is formed as an article of apparel or enclosure capable of transmitting moisture vapor, wherein apparel articles include garments such as outer wear, under wear, jackets, top, shirts, pants, gloves, foot wear, hats, hoods and may further include enclosures such as tents, sleeping bags, casualty bags, shelters and the like. The chemical protective article of apparel or enclosure preferably comprises a fabric laminate comprising an apparel face fabric layer, an apparel backing fabric layer, and a layer having the sulfonated aromatic polymer or a composite comprising a sulfonated aromatic polymer and a substrate layer.

Another preferred embodiment of the present invention is directed to a method of reducing exposure of a person to noxious or harmful chemicals while providing a high rate of moisture vapor permeation. The method comprises the steps of interposing between a person and a harmful chemical, a chemical protective covering such as an article of apparel or enclosure, comprising a laminate that has preferential permeability towards water vapor relative to the harmful chemical. The laminate comprises a layer comprising at least the sulfonated aromatic polymer described herein laminated to at least one membrane, film or fabric layer. Where the protective covering comprises an article of apparel, the method preferably comprises covering at least a portion of a person who may be exposed to noxious or harmful chemicals with the covering. Preferably, the chemical protective covering comprises a fabric laminate comprising at least one layer of apparel fabric and a composite of the sulfonated aromatic polymer and a substrate. More preferably, the fabric laminate has a permeation to 2CES of less than or equal to about 100 $\mu g/cm^2$, and a permeation to PMF of less than or equal to about 30 $\mu g/cm^2$.

A method of making an article of apparel or enclosure which is resistant to permeation by chemicals comprises the steps of providing a layer comprising at least a sulfonated aromatic polymer, laminating it to at least one layer of membrane, film or apparel fabric, to form a laminate which has a permeation of 2CES of less than about 100 μg/cm2, and forming the laminate into an article of apparel or enclosure. Lamination may be accomplished by any method known in the art. For example, lamination may be accomplished by thermal bonding, mechanical attachment such as sewn connections or other fixations, coating or adhering at least a portion of two or more layers of the present invention. Preferably, the layer having the sulfonated aromatic polymer, or the composite, is laminated directly onto at least one layer of apparel fabric, for example by adhering with heat or adhesives. As mentioned above, adhesives may be applied discontinuously or continuously or in patterns provided sufficient moisture vapor transmission properties are maintained. The adhesive or sewn connections may be present throughout the layers such as in quilting, or point bonded non-woven materials, or may only be present at the seams or at the cuffs, for example in garments, gloves and other articles of clothing. Therefore, the term "laminate" as used herein refers to any layered construction held together with connections. Alternately, where the sulfonated aromatic polymer is in a solution or dispersion, it may be laminated to a fabric layer or a substrate layer by any known coating method such as painting, roll coating, spraying, extrusion and the like, onto

at least one layer of apparel fabric or substrate.

TEST METHODS

Moisture Vapor Transmission Rate Test

Moisture vapor transmission rates (MVTRs) were determined using the procedure set forth in U.S. Pat. No. 4,862,730 using potassium acetate as the salt and open pore ePTFE for the waterproof moisture vapor permeable membranes. These membranes nominally had a porosity of between 75% and 80%, average pore size of 0.2 um, with a thickness of approximately 0.04 mm. The environment was maintained at 50% relative humidity. The water bath was maintained at 23 ± 0.5°C. The samples were constrained in a 3" (about 7.5 cm) diameter plastic hoop and placed on the bath with woven shell fabric facing up. The purpose of using the plastic hoop was to avoid any buckling of the sample. The samples were conditioned on the bath with the salt cup on top for about 15 minutes before starting the test. The MVTR number is reported in the unit of $g/m^2/day$.

Permeation of Bis-2-Chloroethyl Sulfide (2CES) Test

Chemical permeation testing and analysis were adapted from (1) "Air-Permeable and Semi-permeable Materials Sorbent/Reactant Capacity Testing (Vapor Agent Challenge/Vapor Penetration)", protocols outlined in U.S. Army Test and Evaluation Command, Test Operating Procedure 8-2-501 (March 1997) and (2) Laboratory Methods for Evaluating Protective Clothing Systems Against Chemical Agents, CRDC-SP-84010 (June 1984). Testing was completed at Geomet Technologies, Inc., Gaithersburg, MD. A description of the test apparatus and experimental conditions follows.

The permeability to bis-2-chloroethyl sulfide (chemical structure $Cl-CH_2CH_2-S-CH_2CH_2-Cl$), referred to as "2CES", was determined using equipment consisting of a series of test cells in which laminate samples are placed. The entire test cell assembly is placed within an environmental chamber in which the temperature is controlled to 32°C. Each cell consists of an upper and lower section, termed cell top and bottom. Both cell halves are equipped with inlet and outlet ports to allow the sweeping of air streams through the cell and across the sample surface. The airflow in the cell top is maintained at 0.25 liter/minute and in the cell bottom at 0.3 liter/minute. The temperature of these air streams is controlled to 32° ± 1.1 C and the relative humidity (RH) is controlled at 80±8%. Nominally 8 drops of 2CES (1 ul each) are placed on the surface of the sample. The top cell airflow is sent to waste stream. 2CES vapor that has permeated through the sample is swept into the bottom air stream and captured downstream via solid sorbents and liquid impingement.

The area exposed to the 2CES challenge is about 10 $cm^2$. The cell is equipped with sufficient rings, plates, clamps, and seals to securely mount the specimen and prevent leakage either out of the cell or between the cell halves. All cell assemblies are pressurized and leak tested prior to testing.

Upon completion of sample loading within the cells in the environmental chamber, all specimens are conditioned for two hours at 32°C and 80% relative humidity. The cells are taken out one at a time and samples are challenged with 2CES drops by taking the cell top off. The cell is closed and is returned to the environmental chamber. The test is commenced immediately thereafter. After 2 hours the collection media is exchanged with a new one. The collection media is changed again after 6 hours, 12 hours and 20 hours. The solid sorbent and liquid from the impinger are analyzed via colormetric/fluorometric techniques described in the reference materials above. Permeation data is reported as the cumulative mass over a 20 hour duration in units of $micrograms/cm^2$ ($\mu g/cm2$) for each sample. The resolution and lower limit of detection of this test was about 0.1 ug $2CES/cm^2$.

Permeation of Pinacolyl Methylphosphono Fluoridate (PMF) Test

Permeation of PMF was measured using a similar procedure as outlined above for 2CES analysis with the following exceptions. Ten (10) drops of PMF were used in place of 8 drops of 2CES. About 2 milliliter (ml) of simulated sweat (prepared as described in the U. S. Army test procedure referenced above) was placed on the side opposite from the woven fabric. After about 15 minutes, excess liquid was drained off of the sample by tilting the sample and then drops of PMF were placed on the woven fabric side. The environmental conditions employed are similar to those described for 2CES permeation described above.

The analysis procedure used for PMF analysis is substantially similar to the Enzyme Inhibition test method as described in the document titled "Laboratory Methods for Evaluating Protective Clothing Systems Against Chemical Agents", CRDC-SP-84010 (June 1984). Results are reported as permeated cumulative amount during a 20 hour period. The unit used is $\mu g/cm^2$. The lower limit of detection for this test method is about 0.000046 $\mu g/cm^2$.

Ion Exchange Capacity and Equivalent Weight

Ion exchange capacity (IEC) of a film or powder sample was measured by acid-base titration. If not in the acid form, the sample was first converted to the acid form by immersing in 150 ml 1 N HCl overnight followed by rinsing thoroughly with demineralised water to remove any unreacted HCl. The sample was then dried in an oven at about 50° C until a constant weight was obtained. This is referred to as mass of the dry sample (m). The dried sample was immersed in 100 ml 0.1 N NaOH solution for about 24 hours. A 10 ml sample of the solution was decanted and titrated with 0.1 N HCl using methyl-orange as indicator. The IEC was calculated according to the following formula.

$$IEC = \frac{(N1 \times V1) - 10(N2 \times V2)}{m}$$

where N1, N2 and V1, V2 are normality and volume of NaOH and HCl respectively and m is mass of dry sample. Because N1 and N2 = 0.1N and V1 = 100 ml, IEC could be written as

$$IEC = (10-V2)/m$$

The unit of IEC is meq/g. Equivalent Weight (EW) is defined as 1000/IEC. The unit is g/equivalent.

The following examples are illustrative of the present invention, however it should be apparent that the present invention is not limited by the examples.

Sulfonated Aromatic Polymer Preparation:

Sulfonated Polyether Sulfone (sPES):

sPES was obtained which was prepared from PES powder from Solvay Advanced Polymers, L.L.C. (Alpharetta, GA). The procedure for sulfonation was performed substantially according to the method described in "Influence Of The Nature Of Polymer Matrix And The Degree Of Sulfonation On The Properties Of Membranes" (Komkova et al., Polymer Science, ser. A, vol. 43, No. 3, 2001, pp. 300-307), which was used for the preparation of sulfonated polysulfones. The resulting sPES polymer had an IEC of about 1 meq/g as measured by the procedure described above. The calculated EW was about 1000 g/equivalent. The sulfonated polymer had the following structure

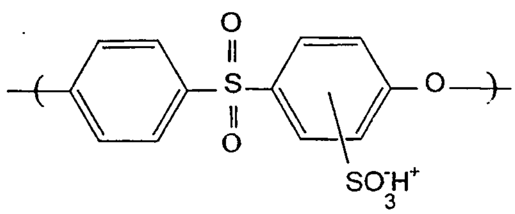

Sulfonated Polyetherether Ketone (sPEEK):

sPEEK was obtained which was prepared from PEEK powder obtained from Entegris Inc., (Chaska, MN USA) that was sulfonated substantially according to the method described in "Influence Of The Nature Of Polymer Matrix And The Degree Of Sulfonation On The Properties Of Membranes" (E. N. Komkova et. al., Polymer Science, ser. A, vol. 43, No. 3, 2001, pp. 300-307.) Sulfonated PEEK samples were produced with three different amounts of sulfonation having IEC of about 1.3 meq/g, about 1.5 meq/g, and about 2.52 meq/g. The calculated equivalent weights were about 769, 667 and 397 g/equivalent respectively. A potassium salt version of the 1.5 IEC polymer was also prepared by neutralizing with KOH solution. The sulfonated PEEK potassium salt had the following structure.

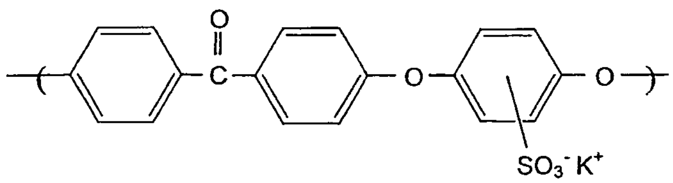

Sulfonated Biphenyl Sulfone Hydrogen Form (sBPSH):

sBPSH was obtained which was prepared substantially in accordance with the method described in PCT publication WO 02/25764 A1 entitled "Ion-Conducting Sulfonate Polymeric Materials" by McGrath et al. published 28 March 2002. The Na/K form of sBPSH was produced having an IEC of about 1.52 meq/g (EW: 660 g/equivalent). sBPSH polymer was a copolymer having the following repeat units.

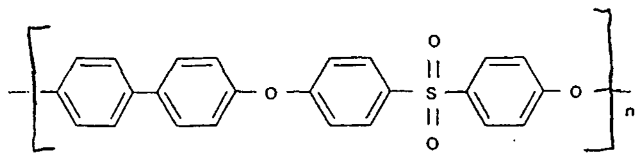

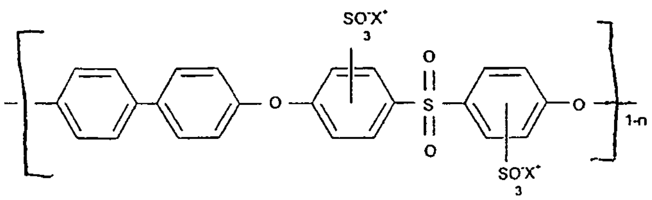

where X is Na or K, and n is greater than zero and less than one.

Sulfonated Polyphthalazinone Ether Ketone (sPPEK):

sPPEK was obtained which was prepared substantially in accordance with the method described in PCT publication WO 03/005474 A2 entitled "Ionomer For Use In Fuel Cells And Method Of Making Same" by Guyu Xiao et.al., published 16 January 2003. The Na/K form of sPPEK polymer was produced having an IEC of about 1.67 meqv/g (EW: 600 g/equivalent). The sPPEK polymer was a copolymer having the following repeat units.

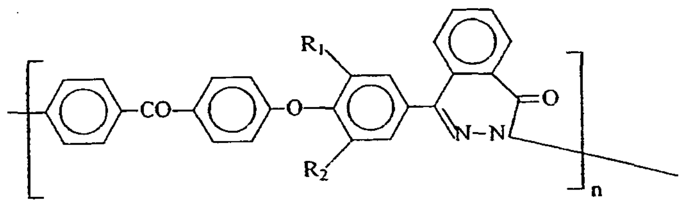

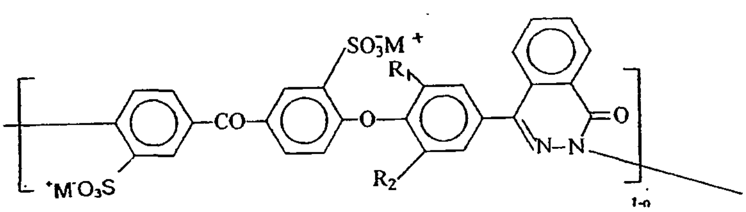

where M is Na or K, and R1 and R2 are H, and n is greater than zero and less than one.

## Examples

### Examples 1-3:

Fabric laminates made from a woven polyamide fabric and films of sPES, sPEEK, and a PES/sPEEK blend were prepared and tested for Moisture Vapor Transmission Rates (MVTR) and 2CES permeation.

Films of sPES, sPEEK, and a 20/80 wt % mixture of PES and sPEEK were obtained that had been prepared by dissolving the polymers in dimethyl formamide (DMF) solvent to form a 20% casting solution by stirring at room temperature for at least about 30 min. Each polymer was cast using a casting knife on a glass plate, and dried at about 60° C for about 4 to 6 hours to form films that were lifted off the glass plate using tweezers. The obtained films were dried at about 100° C in a vacuum oven for about 36 hours.

Following vacuum drying, each film was laminated to a woven fabric using a multipurpose spray adhesive, Super 77 (3M Engineered Adhesive Division, St. Paul, MN 55144-1000). The adhesive was lightly sprayed on the surface of the fabric, and the film was placed on top of the adhesive. Hand pressure was applied to ensure good contact between the two layers. The woven fabric was a plain weave polyamide Nylon 6,6 fabric (2.8 oz/square yard, or about 90 g/$m^2$, style # 130665, Milliken & Company, Spartanburg, SC). The fabric was pre-treated with a fluoropolymer resin (Mitsubishi Textile Chemicals, Somerset, NJ) to impart durable water repellency (DWR) using procedures recommended by the supplier. The resulting fabric laminates were characterized for moisture vapor permeation (MVTR, g/$m^2$/day) and 2CES permeation (μg /$cm^2$), the results of which are reported below.

| Example No. | Polymer | Film Thickness | MVTR | 2CES Permeation |
|---|---|---|---|---|
| 1 | sPES (IEC=1) | 40 μm | 636 | 0.6 |
| 2 | sPEEK (IEC=2.52) | 35 μm | 10,213 | 10.6 |
| 3 | 20%PES/80%sPEEK (sPEEK IEC=2.52) | 30 μm | 11,485 | 22.0 |

### Example 4:

A fabric laminate of a film of sPPEK and a woven polyamide fabric was prepared and tested for Moisture Vapor Transmission Rates (MVTR) and 2CES permeation.

Approximately 1.11g sPPEK powder was dissolved in DMSO to form about a 9.4% solution by weight. The dissolution was performed by shaking in a incubator at about 60°C for 24 hours. A film was cast on an 8"X16" (about 20 cm X 40 cm) glass plate using a 5" (about 12.7 cm) wide draw down bar (from BYK Gardner, Inc., Columbia, MD) having a 20 mil (0.51 mm) opening. The film was dried in an air circulated oven for about 6 hours at about 30°C. Drying was continued at about 60°C for 24 hours followed by heating to about 100°C for 24 hours. A final heating was performed at about 150°C for 15 minutes. The resulting film was then laminated to a woven polyamide fabric as described in Examples 1-3 above. The fabric laminate had a MVTR of about 7551 g/$m^2$/day and 2CES permeation was about 0.2 μg/$cm^2$.

### Examples 5-7:

Fabric laminates were prepared from three samples of sPEEK film which were laminated to a woven polyamide fabric and tested for Moisture Vapor Transmission Rates (MVTR) and chemical permeation.

A film was obtained which was prepared by casting a 20% solution by weight of sPEEK (IEC = 1.3 meq/g)on a glass plate using a casting knife. The polymer was dried at about 60° C for about 4 to 6 hours to form a film, and lifted off the glass plate using tweezers. The film was further dried at about 95°C for about 21 hours in an air circulated oven.

The 5" X 10" (about 12.5 cm X 25 cm) film was cut into three equal length pieces. Two of the pieces were heat treated at about 180°C for 15 minutes, followed by heating to about 200°C for about 10 minutes to impart cross-linking of the sulfonic acid groups. All three films were laminated to a woven polyamide fabric as described in Examples 1-3 above. An additional knit layer was applied to the film side of all samples by first spraying the spray adhesive, Super 77 (3M Engineered Adhesive Division, St. Paul, MN) on the knit and placing the laminate with film side towards the knit. A gentle hand pressure was applied to ensure good contact between the layers. The knit employed was a 1.1 oz/square yard (about 35 g/$m^2$) polyester warp knit (style # A1012, Native Textiles, Inc, New York, NY). The resulting laminates were characterized for MVTR (g/$m^2$/day) and chemical permeation (μg /$cm^2$), the results of which are reported below.

| Example No. | Heat Treating | MVTR | 2CES Permeation | PMF Permeation |
|---|---|---|---|---|
| 5 | No | 7,348 | 28.2 | - |

(continued)

| Example No. | Heat Treating | MVTR | 2CES Permeation | PMF Permeation |
|---|---|---|---|---|
| 6 | Yes | 5,555 | 18.6 | - |
| 7 | Yes | 5,641 | - | 0.00006 |

Example 8:

A fabric laminate was formed from a solution of sBPSH applied to the ePTFE membrane side of an ePTFE/polyester knit laminate, and then further laminated to a woven polyamide fabric, and tested for Moisture Vapor Transmission Rates (MVTR) and 2CES permeation.

A 20% wt solution of sBPSH was made by dissolving the powder in N-methyl pyrrolidinone (NMP) solvent. The dissolution was performed in an incubator/shaker at about 55°C for at least about 12 hours. The solution was used to make a composite with a pre-fabricated ePTFE/knit laminate. The ePTFE/knit laminate was formed from an expanded polytetrafluoroethylene (ePTFE) membrane weighing about 50 g/m$^2$ adhered to a polyester knit described in Example 7, using a polyurethane adhesive described in U.S. Patent No. 4,194,041. The adhesive was applied in a discontinuous pattern so as to achieve approximately 35% area coverage of the adhesive. The ePTFE membrane (W.L.Gore & Assoc. Inc., Elkton, MD) was made substantially according to the method described in U.S. Patent No. 3, 953, 566. The ePTFE side of the laminate was treated with atmospheric plasma substantially according to procedures described in U.S. Patent No. 6,118,218 to improve wetting characteristics.

The composite was prepared by placing an 8" x 16" (about 20 cm X 40 cm) piece of the ePTFE/knit laminate in a fumehood with membrane side up. It was pre-wetted using a small amount of NMP solvent after which the 20% wt sPBSH solution was cast on top using a drawdown bar with 15 mil (about 0.38 mm) opening as described above in Example 4. The resulting composite was allowed to dry at ambient conditions for about 2 days. It was then taped to a glass plate to avoid curling and heated in an air circulated oven at about 100°C for about 16 hours, followed by heating for about 5 hours at about 150°C.

An additional layer of a woven polyamide fabric was adhered to the sBPSH polymer side using the procedure and fabric described in Examples 1-3 above. The MVTR of the final laminate was about 1,996 g/m$^2$/day and 2CES permeation was about 0.1 $\mu$g/cm$^2$.

Example 9:

A fabric laminate was formed from a solution of sPPEK applied to the ePTFE membrane side of an ePTFE/polyester knit laminate, and then further laminated to a woven polyamide fabric, and tested for Moisture Vapor Transmission Rates (MVTR) and 2CES permeation.

A 10% wt solution of sPPEK was made by dissolving the polymer in dimethyl sulfoxide (DMSO) solvent. The dissolution was performed in an incubator/shaker at about 55°C for at least about 12 hours. The solution was used to make a composite with a pre-fabricated ePTFE/knit laminate. The ePTFE/knit laminate was formed from an expanded polytetrafluoroethylene (ePTFE) membrane weighing about 50 g/m$^2$ adhered to a polyester knit as described in Example 7, using a polyurethane adhesive described in US Patent No.4, 194, 041. The adhesive was applied in a discontinuous pattern so as to achieve approximately 35% area coverage of the adhesive. The ePTFE membrane (W.L.Gore & Assoc. Inc., Elkton, MD) was made substantially according to the method described in U.S. Patent No. 3, 953, 566. The ePTFE side of the laminate was treated with atmospheric plasma substantially according to procedures described in U.S. Patent No. 6,118,218 to improve wetting characteristics.

The composite was prepared by placing an 8" X 16" (about 20 cm X 40 cm) piece of the ePTFE/knit laminate in a fume hood with membrane side up. It was pre-wetted using a small amount of DMSO solvent after which the 20% wt sPPEK solution was cast on top using a draw down bar with 15 mil (0.38 mm) opening as described above in Example 4. The resulting composite was allowed to dry at ambient conditions for about 2 days. It was then taped to a glass plate to avoid curling and heated in an air circulated oven at about 100°C for about 16 hours, followed by heating for about 5 hours at about 150°C.

An additional layer of a woven polyamide fabric was adhered to the sPPEK polymer side using the procedure and fabric described in Examples 1-3 above. The MVTR of the final laminate was about 4831 g/m$^2$/day and 2CES permeation was less than about 0.1 $\mu$g/cm$^2$.

Example 10-11:

Films of sPEEK polymer and its K salt version were formed and then converted to calcium salt form and

laminated to a woven polyamide to form a fabric laminate and tested for MVTR and 2CES permeation.

A sPEEK polymer with an IEC of about 1.5 and its K salt version were dissolved in DMSO in a incubator/shaker at about 50°C for 24 hours to obtain a 20% solution by weight. Films were cast on a glass plate using a draw down bar with about a 10 mil (about 0.25 mm) opening. Resulting films were allowed to dry in the hood under ambient conditions for at least 12 hours. They were then dried at about 100°C for about 22 hours followed by heating for about 2 hours at about 150°C. They were then converted to calcium salt form by soaking in a 1 N $CaCl_2.2H_2O$ solution for at least 24 hours. Gentle shaking was performed in the shaker during the soaking period. The films were taken out of the soaking solution and rinsed twice with excess deionized water to remove any $CaCl_2$ salt. The pH of the rinsed water was about 6-7.

The films were dried at ambient conditions for several days, and then laminated to a woven polyamide fabric as described in Examples 1-3 and characterized for MVTR g/m$^2$/day and 2CES μg /cm$^2$ permeation. The results are reported below.

| Example No. | Starting Polymer | Film Thickness | MVTR | 2CES Permeation |
|---|---|---|---|---|
| 10 | sPEEK (IEC=1.5) (proton version) | 30 um | 10,097 | <0.1 |
| 11 | sPEEK (IEC=1.5), (K salt version) | 30 um | 9,489 | <0.1 |

## Claims

1. A chemical protective covering comprising a laminate comprising

   a layer (20) comprising at least a sulfonated aromatic polymer, wherein the polymer comprises
   at least one repeating aromatic group selected from 5, 6, or 7 membered single or fused rings having 0, 1, 2, 3, or, 4 heteroatoms selected from N, O or S, and at least a portion of the aromatic groups having at least one pendant group comprising sulfonic acid, or its salt,
   wherein the polymer has a sulfonic acid equivalent weight of 200-1000 (IEC: 1.0-5.0 meq/g), and
   at least one additional layer (25,25a) laminated to the layer comprising the sulfonated aromatic polymer,

   wherein the laminate is capable of transmitting moisture vapor and resisting chemical permeation.

2. The chemical protective covering of claim 1, wherein the covering is an article of apparel or enclosure.

3. The chemical protective covering of claim 2, wherein the article of apparel or enclosure is selected from outer wear, under wear, jackets, pants, gloves, footwear, and hoods.

4. The chemical protective covering of claim 2, wherein the enclosure is selected from tents, sleeping bags, casualty bags, and shelters.

5. The chemical protective covering of claim 1 wherein the at least one additional layer comprises at least one layer selected from fabric (25,25a), membrane and film.

6. The chemical protective covering of claim 1, wherein the at least one additional layer is at least one layer of fabric selected from knit, woven or non-woven apparel fabrics comprising synthetic or natural fibers of polymers selected from poly(aliphatic amide), poly(aromatic amide), polyester, polyolefin, wool, cellulose based fibers, modified cellulose, polyurethane, acrylics, modacrylics, and a blend thereof.

7. The chemical protective covering of claim 1 having a moisture vapor transmission rate of greater than or equal to 600 g/m$^2$/day.

8. The chemical protective covering of claim 1 having a moisture vapor transmission rate of greater than or equal to 2000 g/m$^2$/day,

9. The chemical protective covering of claim 1, having a permeability to bis-2-chloroethyl sulfide of less than or equal to 100 μg/cm$^2$ over a 20 hour period.

10. The chemical protective covering of claim 1, having a permeability to bis-2-chloroethyl sulfide of less than or equal to 30 μg/cm$^2$ over a 20 hour period.

**11.** The chemical protective covering of claim 1, having a permeability to bis-2-chloroethyl sulfide of less than or equal to 10 $\mu g/cm^2$ over a 20 hour period.

**12.** The chemical protective covering of claim 1, having a permeability to pinacolyl methylphosphono fluoridate of less than or equal to 30 $\mu g/cm^2$ over a 20 hour period.

**13.** The chemical protective covering of claim 1, having a permeability to pinacolyl methylphosphono fluoridate of less than or equal to 10 $\mu g/cm^2$ over a 20 hour period.

**14.** The chemical protective covering of claim 1, having a permeability to pinacolyl methylphosphono fluoridate of less than or equal to 5 $\mu g/cm^2$ over a 20 hour period.

**15.** The chemical protective covering of claim 1 wherein the sulfonated aromatic polymer has a sulfonic acid equivalent weight of 400-800 (IEC: 1.25-2.5 meq/g).

**16.** The chemical protective covering of claim 1 wherein at least a portion of the aromatic groups are linked by one or more linkages comprising ketone, sulfone, ether, sulfide, urethane, amide, imide, ester, substituted or unsubstituted saturated or unsaturated $C_{1-5}$ alkylene, substituted or unsubstituted phosphine, and phosphine oxide groups.

**17.** The chemical protective covering of claim 1 wherein at least a portion of the aromatic groups have one or more substitutions selected from $C_1$-$C_8$ alkyl and haloalkyl, aryl, ketone, hydroxyl, halogen, amine, cyanide, nitrile, sulfide, carbonyl, $C_1$-$C_8$ ester, and $C_1$-$C_8$ alkoxyl group.

**18.** The chemical protective covering of claim 1, wherein the sulfonated aromatic polymer is crosslinked.

**19.** The chemical protective covering of claim 1, wherein the sulfonated aromatic polymer is ionically crosslinked.

**20.** The chemical protective covering of claim 1, wherein the layer comprising the sulfonated aromatic polymer comprises at least one additional component.

**21.** The chemical protective covering of claim 1, wherein the layer comprising the sulfonated aromatic polymer is a composite comprising a sulfonated aromatic polymer and at least one substrate (21,22,23,23a).

**22.** The chemical protective covering of claim 20, wherein the at least one substrate is expanded polytetrafluoroethylene (ePTFE).

**23.** The chemical protective covering of claim 21, wherein the sulfonated aromatic polymer has a sulfonic acid equivalent weight of 400-800 (IEC: 1.25-2.5 meq/g).

**24.** A chemical protective article of apparel or enclosure for use in reducing exposure to chemicals comprising a fabric laminate capable of transmitting water vapor comprising
at least one layer (25,25a) of apparel fabric laminated to a layer (20) comprising at least a sulfonated aromatic polymer wherein the polymer comprises at least one repeating aromatic group selected from 5, 6, or 7 membered single or fused rings having 0, 1, 2, 3, or 4 heteroatoms selected from N, O or S, and at least a portion of the aromatic groups having at least one pendant group comprising sulfonic acid, or its salt, wherein the polymer has a sulfonic acid equivalent weight of 200-1000 (IEC: 1.0-5.0 meq/g), and wherein the fabric laminate has a permeation to bis-2-chloroethyl sulfide of less than or equal to 100 $\mu g/cm^2$.

**25.** The chemical protective article of apparel or enclosure of claim 24 wherein the layer comprising the sulfonated aromatic polymer has a permeation to bis-2-chloroethyl sulfide of less than or equal to 30 $\mu g/cm^2$ over a 20 hour period.

**26.** The chemical protective article of apparel or enclosure of claim 24 wherein the layer comprising the sulfonated aromatic polymer has a permeation to bis-2-chloroethyl sulfide of less than or equal to 10 $\mu g/cm^2$ over a 20 hour period.

**27.** The chemical protective article of apparel or enclosure of claim 24 wherein the at least one layer of apparel fabric is selected from knit, woven and non-woven apparel fabrics.

**28.** The chemical protective article of apparel or enclosure of claim 24 comprising at least two layers of apparel fabric (25,25a).

**29.** The chemical protective article of apparel or enclosure of claim 24 wherein the at least one layer of apparel fabrics comprises synthetic or natural fibers of polymers selected from poly(aliphatic amide), poly(aromatic amide), polyester, polyolefin, wool, cellulose based fibers, modified cellulose, polyurethane, acrylics, modacrylics, and a blend thereof.

**30.** The chemical protective article of apparel or enclosure of claim 24 wherein the article of apparel is selected from outer wear, under wear, jackets, pants, gloves, foot wear, and hoods.

**31.** The chemical protective article of apparel or enclosure of claim 24 wherein the enclosure is selected from tents, sleeping bags, casualty bags and structures.

**32.** The chemical protective article of apparel or enclosure of claim 24 wherein at least a portion of the aromatic groups are linked by one or more linkages comprising ketone, sulfone, ether, sulfide, urethane, amide, imide, ester, substituted or unsubstituted saturated or unsaturated $C_{1-5}$ alkylene, substituted or unsubstituted phosphine, and phosphine oxide groups.

**33.** The chemical protective article of apparel or enclosure of claim 24 wherein at least a portion of the aromatic groups are linked by one or more linkages comprising ketone, sulfone, imide and ether.

**34.** The chemical protective article of apparel or enclosure of claim 24 wherein at least a portion of the aromatic groups have one or more substitutions selected from $C_1$-$C_8$ alkyl and haloalkyl, aryl, ketone, hydroxyl, halogen, amine, cyanide, nitrile, sulfide, carbonyl, $C_1$-$C_8$ ester and $C_1$-$C_8$ alkoxyl groups.

**35.** The chemical protective article of apparel or enclosure of claim 24 wherein the sulfonated aromatic polymer has a sulfonic acid equivalent weight of 400-800 (IEC: 1.25-2.5 meq/g).

**36.** The chemical protective article of apparel or enclosure of claim 24 wherein the layer comprising the sulfonated aromatic polymer is a composite comprising the sulfonated aromatic polymer and at least one substrate (21,22,23,23a).

**37.** The chemical protective article of apparel or enclosure of claim 36 wherein the at least one substrate of the composite is a porous substrate (22,23,23a).

**38.** The chemical protective article of apparel or enclosure of claim 36 wherein the at least one substrate of the composite is an expanded polytetrafruoroethylene (ePTFE) membrane.

**39.** The chemical protective article of apparel or enclosure of claim 36 wherein at least a portion of the sulfonated aromatic polymer resides partially or fully in the expanded polytetrafluoroethylene (ePTFE) membrane.

**40.** The chemical protective article of apparel or enclosure of claim 38 wherein the layer having the sulfonated aromatic polymer is a composite comprising the sulfonated aromatic polymer and at least two substrates (21,22,23,23a).

**41.** A chemical protective article of apparel or enclosure for use in reducing exposure of a person to harmful chemicals comprising
a fabric laminate capable of transmitting moisture vapor and resisting permeation by harmful chemicals comprising

at least one layer (25,25a) of apparel fabric laminated to
a layer (20) comprising a sulfonated aromatic polymer, the sulfonated aromatic polymer comprising repeat units selected from sulfonated polyether sulfone, sulfonated polyether ketone, sulfonated biphenyl sulfone, sulfonated polyphthalazinone ether ketone, sulfonated polyimide, sulfonated polybenzimidazole, and sulfonated polyphenylene oxide, wherein the sulfonated aromatic polymer has a sulfonic acid equivalent weight of 200-1000 (IEC: 1.0-5.0 meq/g), and

wherein the fabric laminate has a permeation to bis-2-chloroethyl sulfide of less than or equal to about 100 $\mu g/cm^2$ over a 20 hour period.

**42.** The chemical protective article of apparel or enclosure of claim 41 wherein the at least one layer of apparel fabric is selected from knit, woven and non-woven apparel fabrics.

**43.** The chemical protective article of apparel or enclosure of claim 41 wherein the at least one layer of apparel fabric comprises synthetic or natural fibers of polymers selected from poly(aliphatic amide), poly(aromatic amide), polyester, polyolefin, wool, cellulose based fibers, modified cellulose, polyurethane, acrylics, modacrylics, and a blend thereof.

**44.** The chemical protective article of apparel or enclosure of claim 41 comprising at least two layers of apparel fabric (25,25a).

**45.** The chemical protective article of apparel of claim 41 wherein the fabric laminate is waterproof.

**46.** The chemical protective article of apparel or enclosure of claim 41 wherein the fabric laminate is an article of apparel selected from outer wear, under wear, jackets, pants, gloves, foot wears, and hoods.

**47.** The chemical protective article of apparel or enclosure of claim 41 wherein the fabric laminate has a permeation to bis-2-chloroethyl sulfide of less than or equal to 30 $\mu g/cm^2$ over a 20 hour period.

**48.** The chemical protective article of apparel or enclosure of claim 41 wherein the layer comprising the sulfonated aromatic polymer is a composite of a sulfonated aromatic polymer and at least one substrate (21,22,23,23a).

**49.** The chemical protective article of apparel or enclosure of claim 48 wherein at least one substrate is porous or microporous (22,23,23a).

**50.** The chemical protective article of apparel or enclosure of claim 49 wherein at least one substrate is expanded polytetrafluoroethylene (ePTFE).

**51.** The chemical protective article of apparel or enclosure of claim 48 comprising at least two substrates comprising expanded polytetrafluoroethylene (ePTFE).

**52.** The chemical protective article of apparel or enclosure of claim 41 wherein the fabric laminate has a sulfonic acid equivalent weight of 400-800 (IEC: 1.25-2.5 meq/g).

**53.** A method of reducing exposure of a person to chemicals comprising interposing a chemical protective covering between a person and a noxious or harmful chemical, wherein the chemical protective covering comprises a fabric laminate comprising

at least one layer (25,25a) of apparel fabric laminated to a layer (20) comprising at least a sulfonated aromatic polymer, wherein the polymer comprises at least one repeating aromatic group selected from 5, 6, or 7 membered single or fused rings having 0, 1, 2, 3, or 4 heteroatoms selected from N, O or S, and at least a portion of the aromatic groups having at least one pendant group comprising sulfonic acid, or its salt,
wherein the sulfonated aromatic polymer has a sulfonic acid equivalent weight of 200-1000 (IEC: 1.0-5.0 meq/g), and the laminate has a permeation to bis-2-chloroethyl sulfide of less than or equal to 100 $\mu g/cm^2$ over a 20 hour period.

**54.** The method of claim 53 wherein the chemical protective covering is an article of apparel or enclosure.

**55.** The method of claim 53 wherein the chemical protective covering is an article of apparel.

**56.** The method of claim 53 wherein the sulfonated aromatic polymer has a sulfonic acid equivalent weight of 400-800 (IEC: 1.25-2.5 meq/g).

**57.** The method of claim 53 wherein the fabric laminate has a permeation to bis-2-chloroethyl sulfide of less than or equal to 30 $\mu g/cm^2$ over a 20 hour period.

**58.** The method of claim 53 wherein the sulfonated aromatic polymer has repeat units selected from sulfonated polyether sulfone, sulfonated polyether ketone, sulfonated biphenyl sulfone, sulfonated polyphthalazinone ether ketone, sulfonated polyimide, sulfonated polybenzimidazole, and sulfonated polyphenylene oxide.

**59.** The method of claim 53 wherein the sulfonated aromatic polymer comprises a blend of sulfonated and non-sulfonated polymers.

**60.** The method of claim 53 wherein the layer comprising the sulfonated aromatic polymer is a composite comprising at least one substrate selected from porous and microporous substrates (22,23,23a).

**61.** The method of claim 60 wherein the at least one substrate is selected from porous polytetrafluoroethylene (expanded PTFE), polyurethane, polyamides, polyimides, polysulfones, and polyolefins.

**62.** The method of claim 61 wherein the at least one substrate is expanded polytetrafluoroethylene (ePTFE).

**63.** The method of claim 60 wherein the composite comprises at least two substrates comprising expanded polytetrafluoroethylene (ePTFE).

**64.** The method of claim 53 comprising at least two layers of apparel fabric (25,25a).

**65.** The method of claim 53 comprising covering at least a portion of a person who may be exposed to a harmful chemical with a chemical protective article of apparel having a fabric laminate comprising a layer having a sulfonated aromatic polymer with a sulfonic acid equivalent weight of 400-800 (IEC: 1.25-2.5 meq/g), wherein the fabric laminate has a permeation to bis-2-chloroethyl sulfide of less than or equal to 30 $\mu g/cm^2$ over a 20 hour period.

## Patentansprüche

**1.** Schutzbedeckung gegen Chemikalien umfassend ein Laminat umfassend
eine Schicht (2) umfassend mindestens ein sulfoniertes aromatisches Polymer, wobei das Polymer Folgendes umfasst
mindestens eine aromatische Wiederholungsgruppe ausgewählt unter 5-, 6- oder 7-gliedrigen Einzel- oder annellierten Ringen, die 0, 1, 2, 3 oder 4 Heteroatome aufweisen ausgewählt unter N, O oder S und wobei mindestens ein Teil der aromatischen Gruppen mindestens eine Seitengruppe aufweist umfassend Sulfonsäure oder ihr Salz, wobei das Polymer ein Sulfonsäureäquivalenzgewicht von 200-1000 (IEC: 1,0-5,0 mäq/g) aufweist, und
mindestens eine zusätzliche Schicht (25,25a), die auf die Schicht, die das sulfonierte aromatische Polymer umfasst, laminiert ist,
wobei das Laminat in der Lage ist, Feuchtigkeitsdampf hindurchzulassen und der Durchdringung von Chemikalien zu widerstehen.

**2.** Schutzbedeckung gegen Chemikalien nach Anspruch 1, wobei die Bedeckung ein Kleidungsstück oder eine Umhüllung ist.

**3.** Schutzbedeckung gegen Chemikalien nach Anspruch 2, wobei der Artikel ein Kleidungsstück oder eine Umhüllung ist ausgewählt unter Außenbekleidung, Unterkleidung, Jacken, Hosen, Handschuhen, Fußbekleidung und Kapuzen.

**4.** Schutzbedeckung gegen Chemikalien nach Anspruch 2, wobei die Umhüllung unter Zelten, Schlafsäcken, Tragbeuteln für Verwundete und Unterständen ausgewählt wird.

**5.** Schutzbedeckung gegen Chemikalien nach Anspruch 1, wobei die mindestens eine zusätzliche Schicht mindestens eine Schicht umfasst ausgewählt unter Textilstoff (25,25a), Membran und Folie.

**6.** Schutzbedeckung gegen Chemikalien nach Anspruch 1, wobei die mindestens eine zusätzliche Schicht mindestens eine Schicht von Textilstoff ausgewählt unter Gestrick-, Gewebe- oder Vliesstoff-Kleidungsstücksstoffen ist, umfassend Synthetik- oder Naturfasern von Polymeren ausgewählt unter poly(aliphatischem Amid), poly(aromatischem Amid), Polyester, Polyolefin, Wolle, Fasern auf Cellulosebasis, modifizierter Cellulose, Polyurethan, Acrylen, Modacrylen und einer Mischung davon.

**7.** Schutzbedeckung gegen Chemikalien nach Anspruch 1, die eine Feuchtigkeitsdampfdurchlässigkeitsrate von mehr als oder gleich 600 $g/m^2$/Tag aufweist.

**8.** Schutzbedeckung gegen Chemikalien nach Anspruch 1, die eine Feuchtigkeitsdampfdurchlässigkeitsrate von mehr als oder gleich 2000 $g/m^2$/Tag aufweist.

**9.** Schutzbedeckung gegen Chemikalien nach Anspruch 1, die eine Durchlässigkeit für Bis-2-chlorethylsulfid von weniger als oder gleich 100 $\mu g/cm^2$ über eine Zeitspanne von 20 Stunden aufweist.

**10.** Schutzbedeckung gegen Chemikalien nach Anspruch 1, die eine Durchlässigkeit für Bis-2-chlorethylsulfid von weniger als oder gleich 30 $\mu g/cm^2$ über eine Zeitspanne von 20 Stunden aufweist.

**11.** Schutzbedeckung gegen Chemikalien nach Anspruch 1, die eine Durchlässigkeit für Bis-2-chlorethylsulfid von weniger als oder gleich 10 $\mu g/cm^2$ über eine Zeitspanne von 20 Stunden aufweist.

**12.** Schutzbedeckung gegen Chemikalien nach Anspruch 1, die eine Durchlässigkeit für Pinacolylmethylphosphonfluoridat von weniger als oder gleich 30 $\mu g/cm^2$ über eine Zeitspanne von 20 Stunden aufweist.

**13.** Schutzbedeckung gegen Chemikalien nach Anspruch 1, die eine Durchlässigkeit für Pinalcoylmethylphosphonfluoridat von weniger als oder gleich 10 $\mu g/cm^2$ über eine Zeitspanne von 20 Stunden aufweist.

**14.** Schutzbedeckung gegen Chemikalien nach Anspruch 1, die eine Durchlässigkeit für Pinacolylmethylphosphonfluoridat von weniger als oder gleich 5 $\mu g/cm^2$ über eine Zeitspanne von 20 Stunden aufweist.

**15.** Schutzbedeckung gegen Chemikalien nach Anspruch 1, wobei das sulfonierte aromatische Polymer ein Sulfonsäureäquivalenzgewicht von 400-800 (IEC: 1,25-2,5 mäq/g) aufweist.

**16.** Schutzbedeckung gegen Chemikalien nach Anspruch 1, wobei mindestens ein Anteil der aromatischen Gruppen durch eine oder mehrere Verknüpfungen verknüpft ist umfassend Keton-, Sulfon-, Ether-, Sulfid-, Urethan-, Amid-, Imid-, Ester-, substituierte oder unsubstituierte gesättigte oder ungesättigte $C_{1-5}$-Alkylen-, substituierte oder unsubstituierte Phosphin- und Phosphinoxidgruppen.

**17.** Schutzbedeckung gegen Chemikalien nach Anspruch 1, wobei mindestens ein Anteil der aromatischen Gruppen eine oder mehrere Substitutionen aufweist ausgewählt unter $C_1$-$C_8$-Alkyl- und Haloalkyl-, Aryl-, Keton-, Hydroxyl-, Halogen,- Amin-, Cyanid-, Nitril-, Sulfid-, Carbonyl-, $C_1$-$C_8$-Ester- und $C_1$-$C_8$-Alkoxylgruppe.

**18.** Schutzbedeckung gegen Chemikalien nach Anspruch 1, wobei das sulfonierte aromatische Polymer vernetzt ist.

**19.** Schutzbedeckung gegen Chemikalien nach Anspruch 1, wobei das sulfonierte aromatische Polymer ionisch vernetzt ist.

**20.** Schutzbedeckung gegen Chemikalien nach Anspruch 1, wobei die Schicht, die das sulfonierte aromatische Polymer umfasst, mindestens eine zusätzliche Komponente umfasst.

**21.** Schutzbedeckung gegen Chemikalien nach Anspruch 1, wobei die Schicht, die das sulfonierte aromatische Polymer umfasst, ein Verbundstoff ist, der ein sulfoniertes aromatisches Polymer und mindestens ein Substrat (21,22,23,23a) umfasst.

**22.** Schutzbedeckung gegen Chemikalien nach Anspruch 20, wobei das mindestens eine Substrat aus expandiertem Polytetrafluorethylen (ePTFE) besteht.

**23.** Schutzbedeckung gegen Chemikalien nach Anspruch 21, wobei das sulfonierte aromatische Polymer ein Sulfonsäureäquivalenzgewicht von 400-800 (IEC: 1,25-2,5 mäq/g) aufweist.

**24.** Schutzartikel gegen Chemikalien für ein Kleidungsstück oder eine Umhüllung zur Verwendung zum Reduzieren der Exposition Chemikalien gegenüber, umfassend ein Textilstofflaminat, das dazu fähig ist, Wasserdampf hindurchzulassen, umfassend
mindestens eine Schicht (25,25a) von Kleidungsstücktextilstoff, der an
eine Schicht (20) laminiert ist, umfassend mindestens ein sulfoniertes aromatisches Polymer, wobei das Polymer mindestens eine aromatische Wiederholungsgruppe umfasst ausgewählt unter 5-, 6- oder 7-gliedrigen Einzel- oder annellierten Ringen, die 0, 1, 2, 3 oder 4 Heteroatome aufweisen ausgewählt unter N, O oder S und wobei mindestens

ein Teil der aromatischen Gruppen mindestens eine Seitengruppe aufweist umfassend Sulfonsäure oder ihr Salz, wobei das Polymer ein Sulfonsäureäquivalenzgewicht von 200-1000 (IEC: 1,0-5,0 mäq/g) aufweist und wobei das Textilstofflaminat eine Durchlässigkeit für Bis-2-Chlorethylsulfid von weniger als oder gleich 100 $\mu g/cm^2$ aufweist.

**25.** Schutzartikel gegen Chemikalien für ein Kleidungsstück oder eine Umhüllung nach Anspruch 24, wobei die Schicht, die das sulfonierte aromatische Polymer umfasst, eine Durchlässigkeit für Bis-2-Chlorethylsulfid von weniger als oder gleich 30 $\mu g/cm^2$ über eine Zeitspanne von 20 Stunden aufweist.

**26.** Schutzartikel gegen Chemikalien für ein Kleidungsstück oder eine Umhüllung nach Anspruch 24, wobei die Schicht, die das sulfonierte aromatische Polymer umfasst, eine Durchlässigkeit für Bis-2-Chlorethylsulfid von weniger als oder gleich 10 $\mu g/cm^2$ über eine Zeitspanne von 20 Stunden aufweist.

**27.** Schutzartikel gegen Chemikalien für ein Kleidungsstück oder eine Umhüllung nach Anspruch 24, wobei die mindestens eine Schicht des Kleidungsstücktextilstoffs unter Gestrick-, Gewebe- und Vliesstoff-Kleidungsstücksstoffen ausgewählt wird.

**28.** Schutzartikel gegen Chemikalien für ein Kleidungsstück oder eine Umhüllung nach Anspruch 24, umfassend mindestens zwei Schichten von Kleidungsstücktextilstoff (25,25a).

**29.** Schutzartikel gegen Chemikalien für ein Kleidungsstück oder eine Umhüllung nach Anspruch 24, wobei die mindestens eine Schicht von Kleidungsstücksstoffen Synthetik- oder Naturfasern von Polymeren umfasst ausgewählt unter poly(aliphatischem Amid), poly(aromatischem Amid), Polyester, Polyolefin, Wolle, Fasern auf Cellulosebasis, modifizierter Cellulose, Polyurethan, Acrylen, Modacrylen und einer Mischung davon.

**30.** Schutzartikel gegen Chemikalien für ein Kleidungsstück oder eine Umhüllung nach Anspruch 24, wobei der Kleidungsstückartikel unter Außenbekleidung, Unterkleidung, Jacken, Hosen, Handschuhen, Fußbekleidung und Kapuzen ausgewählt wird.

**31.** Schutzartikel gegen Chemikalien für ein Kleidungsstück oder eine Umhüllung nach Anspruch 24, wobei die Umhüllung unter Zelten, Schlafsäcken, Tragbeuteln für Verwundete und Konstruktionen ausgewählt wird.

**32.** Schutzartikel gegen Chemikalien für ein Kleidungsstück oder eine Umhüllung nach Anspruch 24, wobei mindestens ein Anteil der aromatischen Gruppen durch eine oder mehrere Verknüpfungen verknüpft ist umfassend Keton-, Sulfon-, Ether-, Sulfid-, Urethan-, Amid-, Imid-, Ester-, substituierte oder unsubstituierte gesättigte oder ungesättigte $C_{1-5}$-Alkylen-, substituierte oder unsubstituierte Phosphin- und Phosphinoxidgruppen.

**33.** Schutzartikel gegen Chemikalien für ein Kleidungsstück oder eine Umhüllung nach Anspruch 24, wobei mindestens ein Anteil der aromatischen Gruppen durch eine oder mehrere Verknüpfungen verknüpft ist umfassend Keton, Sulfon, Imid und Ether.

**34.** Schutzartikel gegen Chemikalien für ein Kleidungsstück oder eine Umhüllung nach Anspruch 24, wobei mindestens ein Anteil der aromatischen Gruppen eine oder mehrere Substitutionen aufweist ausgewählt unter $C_1$-$C_8$-Alkyl- und Haloalkyl-, Aryl-, Keton-, Hydroxyl-, Halogen-, Amin-, Cyanid-, Nitril-, Sulfid-, Carbonyl-, $C_1$-$C_8$-Ester- und $C_1$-$C_8$-Alkoxylgruppen.

**35.** Schutzartikel gegen Chemikalien für ein Kleidungsstück oder eine Umhüllung nach Anspruch 24, wobei das sulfonierte aromatische Polymer ein Sulfonsäureäquivalenzgewicht von 400-800 (IEC: 1,25-2,5 mäq/g) aufweist.

**36.** Schutzartikel gegen Chemikalien für ein Kleidungsstück oder eine Umhüllung nach Anspruch 24, wobei die Schicht, die das sulfonierte aromatische Polymer umfasst, ein Verbundstoff ist, der das sulfonierte aromatische Polymer und mindestens ein Substrat (21,22,23,23a) umfasst.

**37.** Schutzartikel gegen Chemikalien für ein Kleidungsstück oder eine Umhüllung nach Anspruch 36, wobei das mindestens eine Substrat des Verbundstoffs ein poröses Substrat (22,23,23a) ist.

**38.** Schutzartikel gegen Chemikalien für ein Kleidungsstück oder eine Umhüllung nach Anspruch 36, wobei das mindestens eine Substrat des Verbundstoffs eine expandierte Polytetrafluorethylen- (ePTFE) Membran ist.

**39.** Schutzartikel gegen Chemikalien für ein Kleidungsstück oder eine Umhüllung nach Anspruch 36, wobei mindestens ein Anteil des sulfonierten aromatischen Polymers sich teilweise oder vollständig in der expandierten Polytetrafluorethylen- (ePTFE) Membran befindet.

**40.** Schutzartikel gegen Chemikalien für ein Kleidungsstück oder eine Umhüllung nach Anspruch 38, wobei die Schicht, die das sulfonierte aromatische Polymer aufweist, ein Verbundstoff ist, der sulfoniertes aromatisches Polymer und mindestens zwei Substrate (21,22,23,23a) umfasst.

**41.** Schutzartikel gegen Chemikalien für ein Kleidungsstück oder eine Umhüllung zur Verwendung zum Reduzieren der Exposition einer Person schädlichen Chemikalien gegenüber umfassend

ein Textilstofflaminat, das in der Lage ist, Feuchtigkeitsdampf hindurchzulassen und der Durchdringung von schädlichen Chemikalien zu widerstehen, umfassend
mindestens eine Schicht (25,25a) Kleidungsstücktextilstoff, der an eine Schicht (20) laminiert ist, umfassend ein sulfoniertes aromatisches Polymer, wobei das sulfonierte aromatische Polymer Wiederholungsgruppe umfasst ausgewählt unter sulfoniertem Polyethersulfon, sulfoniertem Polyetherketon, sulfoniertem Biphenylsulfon, sulfoniertem Polyphthalazinonetherketon, sulfoniertem Polyimid, sulfoniertem Polybenzimidazol, und sulfoniertem Polyphenylenoxid, wobei das sulfonierte aromatische Polymer ein Sulfonsäureäquivalenzgewicht von 200-1000 (IEC: 1,0-5,0 mäq/g) aufweist und

wobei das Textilstofflaminat eine Durchlässigkeit für Bis-2-Chlorethylsulfid von weniger als oder gleich 100 $\mu g/cm^2$ über eine Zeitspanne von 20 Stunden aufweist.

**42.** Schutzartikel gegen Chemikalien für ein Kleidungsstück oder eine Umhüllung nach Anspruch 41, wobei die mindestens eine Schicht von Kleidungsstücktextilstoff unter Gestrick-, Gewebe- und Vliesstoff-Kleidungsstücktextilstoffen ausgewählt wird.

**43.** Schutzartikel gegen Chemikalien für ein Kleidungsstück oder eine Umhüllung nach Anspruch 41, wobei die mindestens eine Schicht von Kleidungsstücktextilstoff Synthetik- oder Naturfasern von Polymeren ausgewählt unter poly (aliphatischem Amid), poly(aromatischem Amid), Polyester, Polyolefin, Wolle, Fasern auf Cellulosebasis, modifizierter Cellulose, Polyurethan, Acrylen, Modacrylen und einer Mischung davon umfasst.

**44.** Schutzartikel gegen Chemikalien für ein Kleidungsstück oder eine Umhüllung nach Anspruch 41, umfassend mindestens zwei Schichten von Kleidungsstücktextilstoff (25,25a).

**45.** Schutzartikel gegen Chemikalien für ein Kleidungsstück nach Anspruch 41, wobei das Textilstofflaminat wasserdicht ist.

**46.** Schutzartikel gegen Chemikalien für ein Kleidungsstück oder eine Umhüllung nach Anspruch 41, wobei das Textilstofflaminat ein Kleidungsstück ist ausgewählt unter Außenbekleidung, Unterkleidung, Jacken, Hosen, Handschuhen, Fußbekleidung und Kapuzen.

**47.** Schutzartikel gegen Chemikalien für ein Kleidungsstück oder eine Umhüllung nach Anspruch 41, wobei das Textilstofflaminat eine Durchlässigkeit für Bis-2-chlorethylsulfid von weniger als oder gleich 30 $\mu g/cm^2$ über eine Zeitspanne von 20 Stunden aufweist.

**48.** Schutzartikel gegen Chemikalien für ein Kleidungsstück oder eine Umhüllung nach Anspruch 41, wobei die Schicht, die das sulfonierte aromatische Polymer umfasst, ein Verbundstoff ist, der ein sulfoniertes aromatisches Polymer und mindestens ein Substrat (21,22,23,23a) umfasst.

**49.** Schutzartikel gegen Chemikalien für ein Kleidungsstück oder eine Umhüllung nach Anspruch 48, wobei mindestens ein Substrat porös oder mikroporös (22,23,23a) ist.

**50.** Schutzartikel gegen Chemikalien für ein Kleidungsstück oder eine Umhüllung nach Anspruch 49, wobei mindestens ein Substrat expandiertes Polytetrafluorethylen-(ePTFE) ist.

**51.** Schutzartikel gegen Chemikalien für ein Kleidungsstück oder eine Umhüllung nach Anspruch 48, umfassend mindestens zwei Substrate, die expandiertes Polytetrafluorethylen- (ePTFE) umfassen.

52. Schutzartikel gegen Chemikalien für ein Kleidungsstück oder eine Umhüllung nach Anspruch 41, wobei das Textilstofflaminat ein Sulfonsäureäquivalenzgewicht von 400-800 (IEC: 1,25-2,5 mäq/g) aufweist.

53. Verfahren zum Reduzieren der Exposition einer Person Chemikalien gegenüber, umfassend das Einschieben einer Schutzbedeckung gegen Chemikalien zwischen einer Person und einer gesundheitsschädlichen oder gefährlichen Chemikalie, wobei die Schutzbedeckung gegen Chemikalien ein Textilstofflaminat umfasst, das Folgendes umfasst mindestens eine Schicht (25,25a) von Kleidungsstücktextilstoff, der an eine Schicht (20) laminiert ist, umfassend mindestens ein sulfoniertes aromatisches Polymer, wobei das Polymer mindestens eine aromatische Wiederholungsgruppe umfasst ausgewählt unter 5-, 6- oder 7-gliedrigen Einzel- oder annellierten Ringen, die 0, 1, 2, 3 oder 4 Heteroatome aufweisen ausgewählt unter N, O oder S und wobei mindestens ein Teil der aromatischen Gruppen mindestens eine Seitengruppe aufweist umfassend Sulfonsäure oder ihr Salz,
wobei das sulfonierte aromatische Polymer ein Sulfonsäureäquivalenzgewicht von 200-1000 (IEC: 1,0-5,0 mäq/g) aufweist und wobei das Laminat eine Durchlässigkeit für Bis-2-Chlorethylsulfid von weniger als oder gleich 100 $\mu g/cm^2$ über eine Zeitspanne von 20 Stunden aufweist.

54. Verfahren nach Anspruch 53, wobei die Schutzbedeckung gegen Chemikalien ein Kleidungsstück oder eine Umhüllung ist.

55. Verfahren nach Anspruch 53, wobei die Schutzbedeckung gegen Chemikalien ein Kleidungsstück ist.

56. Verfahren nach Anspruch 53, wobei das sulfonierte aromatische Polymer ein Sulfonsäureäquivalenzgewicht von 400-800 (IEC: 1,25-2,5 mäq/g) aufweist.

57. Verfahren nach Anspruch 53, wobei das Textilstofflaminat eine Durchlässigkeit für Bis-2-chlorethylsulfid von weniger als oder gleich 30 $\mu g/cm^2$ über eine Zeitspanne von 20 Stunden aufweist.

58. Verfahren nach Anspruch 53, wobei das sulfonierte aromatische Polymer Wiederholungseinheiten umfasst ausgewählt unter sulfoniertem Polyethersulfon, sulfoniertem Polyetherketon, sulfoniertem Biphenylsulfon, sulfoniertem Polyphthalazinonetherketon, sulfoniertem Polyimid, sulfoniertem Polybenzimidazol, und sulfoniertem Polyphenylenoxid.

59. Verfahren nach Anspruch 53, wobei das sulfonierte aromatische Polymer eine Mischung von sulfonierten und nichtsulfonierten Polymeren aufweist.

60. Verfahren nach Anspruch 53, wobei die Schicht, die das sulfonierte aromatische Polymer umfasst, ein Verbundstoff ist umfassend mindestens ein Substrat ausgewählt von porösen und mikroporösen Substraten (22,23,23a).

61. Verfahren nach Anspruch 60, wobei das mindestens eine Substrat unter porösem Polytetrafluorethylen (expandiertem PTFE), Polyurethan, Polyamiden, Polyimiden, Polysulfonen und Polyolefinen ausgewählt wird.

62. Verfahren nach Anspruch 61, wobei das mindestens eine Substrat expandiertes Polytetrafluorethyen (PTFE) ist.

63. Verfahren nach Anspruch 60, wobei der Verbundstoff mindestens zwei Substrate umfasst, die expandiertes Polytetrafluorethyen (PTFE) umfassen.

64. Verfahren nach Anspruch 53, umfassend mindestens zwei Schichten des Kleidungsstücktextilstoffs (25,25a).

65. Verfahren nach Anspruch 53, umfassend das Bedecken mindestens eines Teils einer Person, die eventuell einer gefährlichen Chemikalie ausgesetzt wird, mit einem Schutzartikel gegen Chemikalien für ein Kleidungsstück, das ein Textilstofflaminat aufweist, das eine Schicht umfasst, die ein sulfoniertes aromatisches Polymer mit einem Sulfonsäureäquivalenzgewicht von 400-800 (IEC: 1,25-2,5 mäq/g) aufweist, wobei das Textilstofflaminat eine Durchlässigkeit für Bis-2-chlorethylsulfid von weniger als oder gleich 30 $\mu g/cm^2$ über eine Zeitspanne von 20 Stunden aufweist.

## Revendications

1. Housse de protection contre les substances chimiques comprenant un stratifié comprenant

une couche (20) comprenant au moins un polymère aromatique sulfoné, dans lequel le polymère comprend au moins un groupe aromatique de répétition sélectionné parmi les cycles simples ou condensés à 5, 6 ou 7 chaînons ayant 0, 1, 2, 3, ou, 4 hétéroatome(s) sélectionné(s) parmi N, O ou S, et au moins une portion des groupes aromatiques ayant au moins un groupe pendant comprenant l'acide sulfonique ou son sel,
dans laquelle le polymère a un poids équivalent en acide sulfonique de 200 à 1000 (CME : 1,0 à 5,0 méq./g), et
au moins une couche supplémentaire (25, 25a) stratifiée sur la couche comprenant le polymère aromatique sulfoné,
dans laquelle le stratifié est capable de transmettre la vapeur d'eau et de résister à la perméation de substances chimiques.

2. Housse de protection contre les substances chimiques selon la revendication 1, dans laquelle la housse est un article vestimentaire ou une enceinte.

3. Housse de protection contre les substances chimiques selon la revendication 2, dans laquelle l'article vestimentaire ou d'enceinte est sélectionné parmi les vêtements à porter par-dessus les autres vêtements, les sous-vêtements, les vestes, les pantalons, les gants, les chaussures et les capuches.

4. Housse de protection contre les substances chimiques selon la revendication 2, dans laquelle l'enceinte est sélectionnée parmi les tentes, les sacs de couchage, les sacs de transport des blessés, et les abris.

5. Housse de protection contre les substances chimiques selon la revendication 1, dans laquelle la au moins une couche supplémentaire comprend au moins une couche sélectionnée parmi le textile (25, 25a), la membrane et le film.

6. Housse de protection contre les substances chimiques selon la revendication 1, dans laquelle la au moins une couche supplémentaire est au moins une couche de textile sélectionnée parmi les textiles de vêtements tricotés, tissés ou non tissés comprenant les fibres synthétiques ou naturelles de polymères sélectionnés parmi le poly(amide aliphatique), le poly(amide aromatique), le polyester, la polyoléfine, la laine, les fibres à base de cellulose, la cellulose modifiée, le polyuréthane, les substances acryliques, les substances modacryliques, et leurs mélanges.

7. Housse de protection contre les substances chimiques selon la revendication 1, ayant un taux de transmission de la vapeur d'eau supérieur ou égal à 600 $g/m^2$/jour.

8. Housse de protection contre les substances chimiques selon la revendication 1, ayant un taux de transmission de la vapeur d'eau supérieur ou égal à 2 000 $g/m^2$/jour.

9. Housse de protection contre les substances chimiques selon la revendication 1, ayant une perméabilité au sulfure de bis-2-chloroéthyle inférieure ou égale à 100 $\mu g/cm^2$ sur une période de 20 heures.

10. Housse de protection contre les substances chimiques selon la revendication 1, ayant une perméabilité au sulfure de bis-2-chloroéthyle inférieure ou égale à 30 $\mu g/cm^2$ sur une période de 20 heures.

11. Housse de protection contre les substances chimiques selon la revendication 1, ayant une perméabilité au sulfure de bis-2-chloroéthyle inférieure ou égale à 10 $\mu g/cm^2$ sur une période de 20 heures.

12. Housse de protection contre les substances chimiques selon la revendication 1, ayant une perméabilité au méthylphosphono fluoridate de pinacolyle inférieure ou égale à 30 $\mu g/cm^2$ sur une période de 20 heures.

13. Housse de protection contre les substances chimiques selon la revendication 1, ayant une perméabilité au méthylphosphono fluoridate de pinacolyle inférieure ou égale à 10 $\mu g/cm^2$ sur une période de 20 heures.

14. Housse de protection contre les substances chimiques selon la revendication 1, ayant une perméabilité au méthylphosphono fluoridate de pinacolyle inférieure ou égale à 5 $\mu g/cm^2$ sur une période de 20 heures.

15. Housse de protection contre les substances chimiques selon la revendication 1, dans laquelle le polymère aromatique sulfoné a un poids équivalent en acide sulfonique de 400 à 800 (CME : 1,25 à 2,5 méq./g).

16. Housse de protection contre les substances chimiques selon la revendication 1, dans laquelle au moins une portion des groupes aromatiques est liée par une ou plusieurs liaison(s) comprenant des groupes cétone, sulfone, éther, sulfure, uréthane, amide, imide, ester, alcylène en $C_{1-5}$ substituée ou non substituée saturée ou insaturée, phosphine

substituée ou non substituée, et oxyde de phosphine.

**17.** Housse de protection contre les substances chimiques selon la revendication 1, dans laquelle au moins une partie des groupes aromatiques a une ou plusieurs substitution(s) sélectionnée(s) parmi les groupes alkyle en $C_1$-$C_8$ et halogénoalkyle, aryle, cétone, hydroxyle, halogéno, amide, cyanure, nitrile, sulfure, carbonyle, ester en $C_1$-$C_8$ et alkoxyle en $C_1$-$C_8$.

**18.** Housse de protection contre les substances chimiques selon la revendication 1, dans laquelle le polymère aromatique sulfoné est réticulé.

**19.** Housse de protection contre les substances chimiques selon la revendication 1, dans laquelle le polymère aromatique sulfoné est ioniquement réticulé.

**20.** Housse de protection contre les substances chimiques selon la revendication 1, dans laquelle la couche comprenant le polymère aromatique sulfoné comprend au moins un composant supplémentaire.

**21.** Housse de protection contre les substances chimiques selon la revendication 1, dans laquelle la couche comprenant le polymère aromatique sulfoné est un composé comprenant un polymère aromatique sulfoné et au moins un substrat (21, 22, 23, 23a).

**22.** Housse de protection contre les substances chimiques selon la revendication 20, dans laquelle le au moins un substrat est du polytétrafluoroéthylène expansé (ePTFE).

**23.** Housse de protection contre les substances chimiques selon la revendication 21, dans laquelle le polymère aromatique sulfoné a un poids équivalent en acide sulfonique de 400 à 800 (CME : 1,25 à 2,5 méq./g).

**24.** Article vestimentaire ou enceinte de protection contre les substances chimiques pour l'utilisation dans la réduction de l'exposition aux substances chimiques comprenant un stratifié textile capable de transmettre la vapeur d'eau comprenant
au moins une couche (25, 25a) d'un textile vestimentaire stratifié sur
une couche (20) comprenant au moins un polymère aromatique sulfoné, dans laquelle le polymère comprend au moins un groupe aromatique de répétition sélectionné parmi les cycles simples ou condensés à 5, 6 ou 7 chaînons ayant 0, 1, 2, 3, ou, 4 hétéroatome(s) sélectionné(s) parmi N, O ou S, et au moins une portion des groupes aromatiques ayant au moins un groupe pendant comprenant l'acide sulfonique, ou son sel, dans lequel le polymère a un point équivalent en acide sulfonique de 200 à 1000 (CEM : 1,0 à 5,0 méq./g), et dans lequel le stratifié textile a une perméation au sulfure de bis-2-chloroéthyle inférieure ou égale à 100 $\mu g/cm^2$.

**25.** Article vestimentaire ou enceinte de protection contre les substances chimiques selon la revendication 24, où la couche comprenant le polymère aromatique sulfoné a une perméation au sulfure de bis-2-chloroéthyle inférieure ou égale à 30 $\mu g/cm$ sur une période de 20 heures.

**26.** Article vestimentaire ou enceinte de protection contre les substances chimiques selon la revendication 24, où la couche comprenant le polymère aromatique sulfoné a une perméation au sulfure de bis-2-chloroéthyle inférieure ou égale à 10 $\mu g/cm^2$ sur une période de 20 heures.

**27.** Article vestimentaire ou enceinte de protection contre les substances chimiques selon la revendication 24, où la au moins une couche du textile vestimentaire est sélectionnée parmi les textiles tricotés, tissés et non tissés.

**28.** Article vestimentaire ou enceinte de protection contre les substances chimiques selon la revendication 24, comprenant au moins deux couches de textile vestimentaire (25, 25a).

**29.** Article vestimentaire ou enceinte de protection contre les substances chimiques selon la revendication 24, où la au moins une couche de textiles vestimentaires comprend des fibres synthétiques ou naturelles des polymères sélectionnés parmi le poly(amide aliphatique), le poly(amide aromatique), le polyester, la polyoléfine, la laine, les fibres à base de cellulose, la cellulose modifiée, le polyuréthane, les substances acryliques, les substances modacryliques, et un mélange de ceux-ci.

**30.** Article vestimentaire ou enceinte de protection contre les substances chimiques selon la revendication 24, où l'article

vestimentaire est sélectionné parmi les vêtements à porter par-dessus les autres vêtements, les sous-vêtements, les vestes, les pantalons, les gants, les chaussures et les hottes.

**31.** Article vestimentaire ou enceinte de protection contre les substances chimiques selon la revendication 24, où l'enceinte est sélectionnée parmi les tentes, les sacs de couchage, les sacs et les structures de transport des blessés.

**32.** Article vestimentaire ou enceinte de protection contre les substances chimiques selon la revendication 24, où au moins une portion des groupes aromatiques est liée par une ou plusieurs liaison(s) comprenant des groupes cétone, sulfone, éther, sulfure, uréthane, amide, imide, ester, alcylène en $C_{1-5}$ substituée ou non substituée, saturée ou insaturée, phosphine substituée ou non substituée, et oxyde de phosphine.

**33.** Article vestimentaire ou enceinte de protection contre les substances chimiques selon la revendication 24, où au moins une portion des groupes aromatiques est liée par une ou plusieurs liaison(s) comprenant les groupes cétone, sulfone, imide et éther.

**34.** Article vestimentaire ou enceinte de protection contre les substances chimiques selon la revendication 24, où au moins une portion des groupes aromatiques a une ou plusieurs substitution(s) sélectionnée(s) parmi les groupes alkyle et halogénoalkyle en $C_1$-$C_8$, aryle, cétone, hydroxyle, halogéno, amine, cyanure, nitrile, sulfure, carbonyle, ester en $C_1$-$C_8$ et alcoxyle en $C_1$-$C_8$.

**35.** Article vestimentaire ou enceinte de protection contre les substances chimiques selon la revendication 24, où le polymère aromatique sulfoné a un point équivalent en acide sulfonique de 400 à 800 (CME : 1,25-2,5 méq./g).

**36.** Article vestimentaire ou enceinte de protection contre les substances chimiques selon la revendication 24, où la couche comprenant le polymère aromatique sulfoné est un composite comprenant le polymère aromatique sulfoné et au moins un substrat (21, 22, 23, 23a).

**37.** Article vestimentaire ou enceinte de protection contre les substances chimiques selon la revendication 36, où le au moins un substrat du composite est un substrat poreux (22, 23, 23a).

**38.** Article vestimentaire ou enceinte de protection contre les substances chimiques selon la revendication 36, où le au moins un substrat du composite est une membrane en polytétrafluoroéthylène expansé (ePTFE).

**39.** Article vestimentaire ou enceinte de protection contre les substances chimiques selon la revendication 36, où au moins une portion du polymère aromatique sulfoné réside partiellement ou entièrement dans la membrane de polytétrafluoroéthylène expansé (ePTFE).

**40.** Article vestimentaire ou enceinte de protection contre les substances chimiques selon la revendication 38, où la couche ayant le polymère aromatique sulfoné est un composite comprenant le polymère aromatique sulfoné et au moins deux substrats (21, 22, 23, 23a).

**41.** Article vestimentaire ou enceinte de protection contre les substances chimiques pour l'utilisation dans la réduction de l'exposition d'une personne à des substances chimiques dangereuses comprenant
un stratifié textile capable de transmettre la vapeur d'eau et de résister à la perméation par des substances chimiques dangereuses comprenant
au moins une couche (25, 25a) de textile vestimentaire stratifié sur une couche (20) comprenant un polymère aromatique sulfoné, le polymère aromatique sulfoné comprenant des motifs de répétition sélectionnés parmi la polyéther sulfone sulfonée, la polyéther cétone sulfonée, la biphényl sulfone sulfonée, la polyphtalazinone éther cétone sulfonée, le polyimide sulfoné, le polybenzimidazole sulfoné, et l'oxyde de polyphénylène sulfoné, où le polymère aromatique sulfoné a un point équivalent en acide sulfonique de 200 à 1 000 (CME : 1,0 à 5,0 méq/g), et où le stratifié textile a une perméation au sulfure de bis-2-chloroéthyle inférieure ou égale à environ 100 $\mu g/cm^2$ sur une période de 20 heures.

**42.** Article vestimentaire ou enceinte de protection contre les substances chimiques selon la revendication 41, où la au moins une couche de textile vestimentaire est sélectionnée parmi les textiles vestimentaires tricotés, tissés et non tissés.

**43.** Article vestimentaire ou enceinte de protection contre les substances chimiques selon la revendication 41, dans

lequel la au moins une couche de textile vestimentaire comprend des fibres synthétiques ou naturelles de polymères sélectionnées parmi le poly(amide aliphatique), le poly(amide aromatique), le polyester, la polyoléfine, la laine, les fibres à base de cellulose, la cellulose modifiée, le polyuréthane, les substances acryliques, les substances modacryliques, et un mélange de ceux-ci.

**44.** Article vestimentaire ou enceinte de protection contre les substances chimiques selon la revendication 41, comprenant au moins deux couches de textile vestimentaire (25, 25a).

**45.** Article vestimentaire ou enceinte de protection contre les substances chimiques selon la revendication 41, dans lequel le stratifié textile est imperméable à l'eau.

**46.** Article vestimentaire ou enceinte de protection contre les substances chimiques selon la revendication 41, où le stratifié textile est un article vestimentaire sélectionné parmi le vêtement à porter par-dessus un vêtement, le sous-vêtement, les vestes, les pantalons, les gants, les chaussures et les capuches.

**47.** Article vestimentaire ou enceinte de protection contre les substances chimiques selon la revendication 41, dans lequel le stratifié textile a une perméation au sulfure de bis-2-chloroéthyle inférieure ou égale à 30 $\mu g/cm^2$ sur une période de 20 heures.

**48.** Article vestimentaire ou enceinte de protection contre les substances chimiques selon la revendication 41, où la couche comprenant le polymère aromatique sulfoné est un composite d'un polymère aromatique sulfoné et d'au moins un substrat (21, 22, 23, 23a).

**49.** Article vestimentaire ou enceinte de protection contre les substances chimiques selon la revendication 48, où au moins un substrat est poreux ou microporeux (22, 23, 23a).

**50.** Article vestimentaire ou enceinte de protection contre les substances chimiques selon la revendication 49, où au moins un substrat est du polytétrafluoroéthylène expansé (ePTFE).

**51.** Article vestimentaire ou enceinte de protection contre les substances chimiques selon la revendication 48, comprenant au moins deux substrats comprenant du polytétrafluoroéthylène expansé (ePTFE).

**52.** Article vestimentaire ou enceinte de protection contre les substances chimiques selon la revendication 41, où le stratifié textile a un point équivalent en acide sulfonique de 400 à 800 (CME : 1,25 à 2,5 méq./g).

**53.** Procédé de réduction de l'exposition d'une personne aux substances chimiques comprenant l'interposition d'une housse de protection contre les substances chimiques entre une personne et une substance chimique nuisible ou dangereuse, où la housse de protection contre les substances chimiques comprend un stratifié textile comprenant au moins une couche (25, 25a) de textile vestimentaire stratifié sur une couche (20) comprenant au moins un polymère aromatique sulfoné, où le polymère comprend au moins un groupe aromatique de répétition sélectionné parmi les cycles simples ou condensés à 5, 6 ou 7 chaînons ayant 0, 1, 2, 3 ou 4 hétéroatome(s) choisi(s) parmi N, O ou S, et au moins une portion des groupes aromatiques ayant au moins un groupe pendant comprenant de l'acide sulfonique, ou son sel,
où le polymère aromatique sulfoné a un point équivalent en acide sulfonique de 200 à 1 000 (CME : 1,0 à 5,0 méq./g), et le stratifié a une perméation au sulfure de bis-2-chloroéthyle inférieure ou égale à 100 $\mu g/cm^2$ sur une période de 20 heures.

**54.** Procédé selon la revendication 53, dans lequel la housse de protection contre les substances chimiques est un article vestimentaire ou une enceinte.

**55.** Procédé selon la revendication 53, dans lequel la housse de protection contre les substances chimiques est un article vestimentaire.

**56.** Procédé selon la revendication 53, dans lequel le polymère aromatique sulfoné a un point équivalent en acide sulfonique de 400 à 800 (CME : 1,25 à 2,5 méq./g).

**57.** Procédé selon la revendication 53, dans lequel le stratifié textile a une perméation au sulfure de bis-2-chloroéthyle inférieure ou égale à 30 $\mu g/cm^2$ sur une période de 20 heures.

**58.** Procédé selon la revendication 53, dans lequel le polymère aromatique sulfoné a des motifs de répétition sélectionnés parmi le polyéther sulfone sulfoné, le polyéther cétone sulfoné, le biphényl sulfone sulfoné, le polyphtalazinone éther cétone sulfoné, le polyimide sulfoné, le polybenzimidazole sulfoné, et l'oxyde de polyphénylène sulfoné.

**59.** Procédé selon la revendication 53, dans lequel le polymère aromatique sulfoné comprend un mélange de polymères sulfonés et non sulfonés.

**60.** Procédé selon la revendication 53, dans lequel la couche comprenant le polymère aromatique sulfoné est un composite comprenant au moins un substrat sélectionné parmi les substrats poreux et microporeux (22, 23, 23a).

**61.** Procédé selon la revendication 60, dans lequel le au moins un substrat est sélectionné parmi le polytétrafluoroéthylène poreux (PTFE expansé), le polyuréthane, les polyamides, les polyimides, les polysulfones et les polyoléfines.

**62.** Procédé selon la revendication 61, dans lequel le au moins un substrat est du polytétrafluoroéthylène expansé (ePTFE).

**63.** Procédé selon la revendication 60, dans lequel le composite comprend au moins deux substrats comprenant du polytétrafluoroéthylène expansé (ePTFE).

**64.** Procédé selon la revendication 53, comprenant au moins deux couches de textile vestimentaire (25, 25a).

**65.** Procédé selon la revendication 53, comprenant le recouvrement d'au moins une partie d'une personne qui peut être exposée à une substance chimique dangereuse avec un article vestimentaire de protection contre les substances chimiques ayant un stratifié textile comprenant une couche ayant un polymère aromatique sulfoné avec un point équivalent en acide sulfonique de 400 à 800 (CME : 1,25 à 2,5 méq./g), où le stratifié textile a une perméation au sulfure de bis-2-chloroéthyle inférieure ou égale à 30 $\mu g/cm^2$ sur une période de 20 heures.

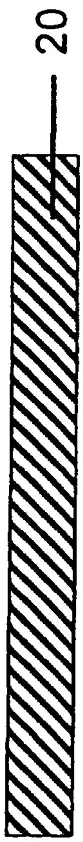


Fig 1.

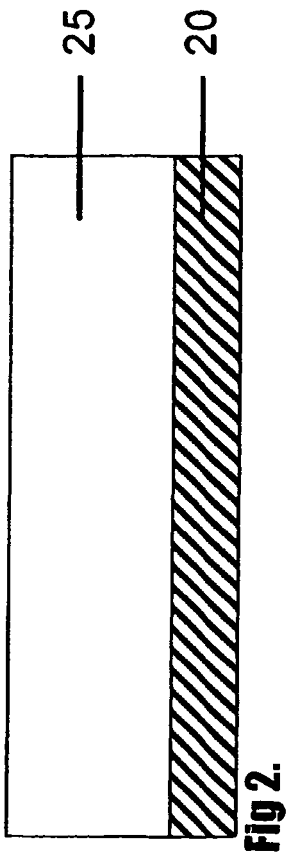


Fig 2.

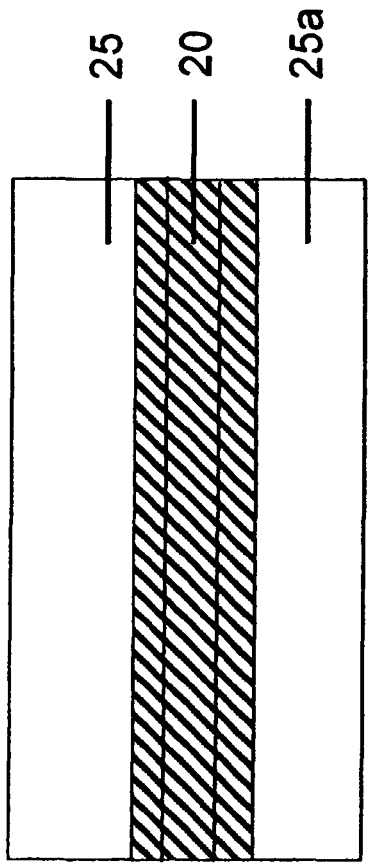


Fig 3.

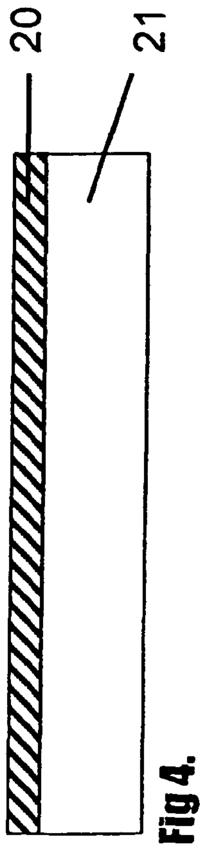


Fig 4.

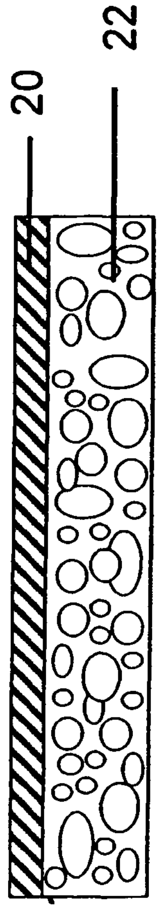


Fig 5.

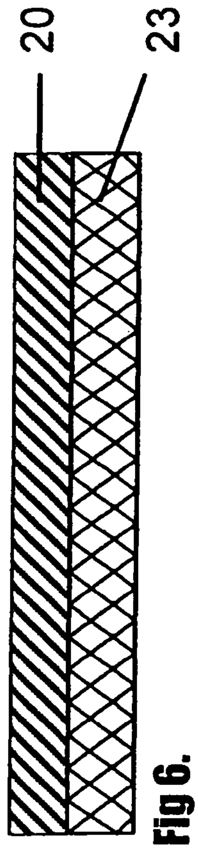


Fig 6.

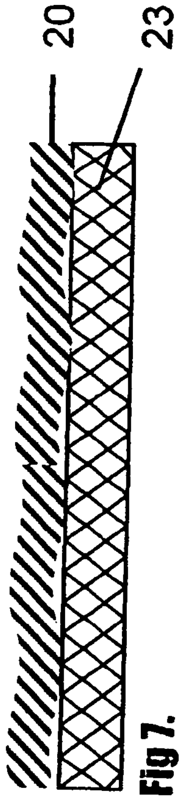


Fig 7.

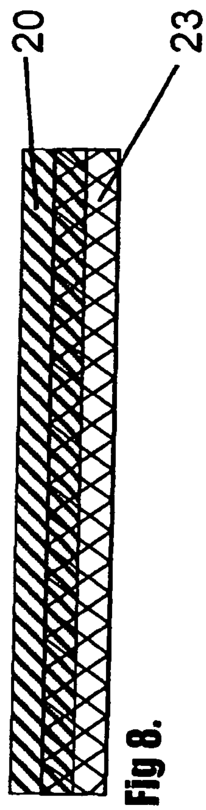


Fig 8.

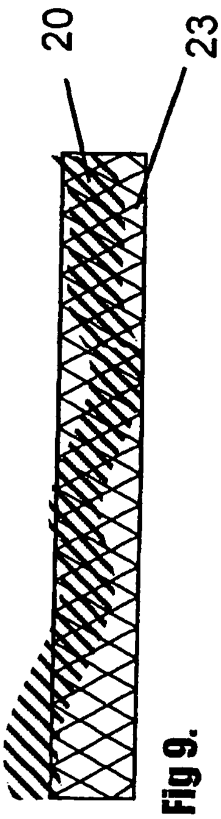


Fig 9.

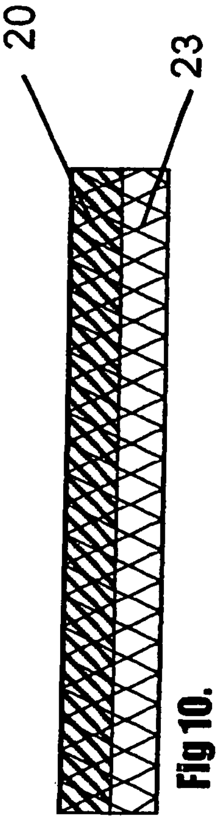


Fig 10.

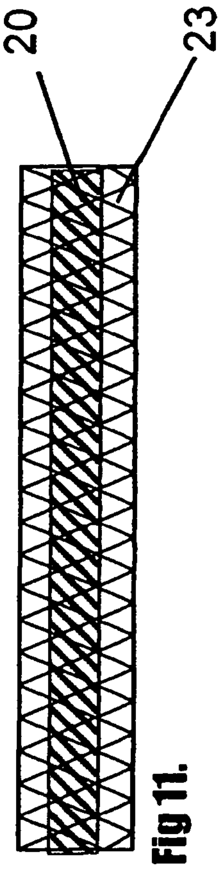


Fig 11.

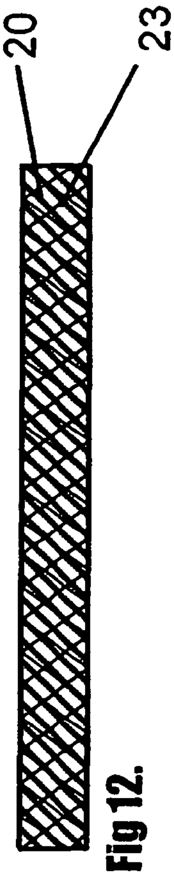


Fig 12.

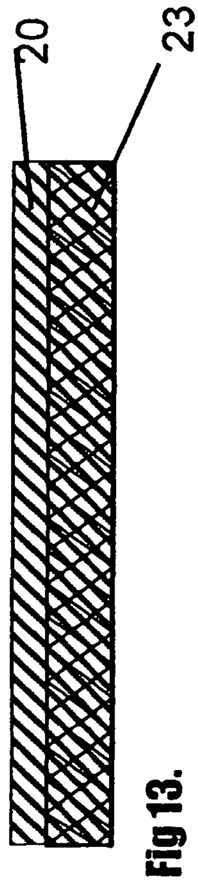


Fig 13.

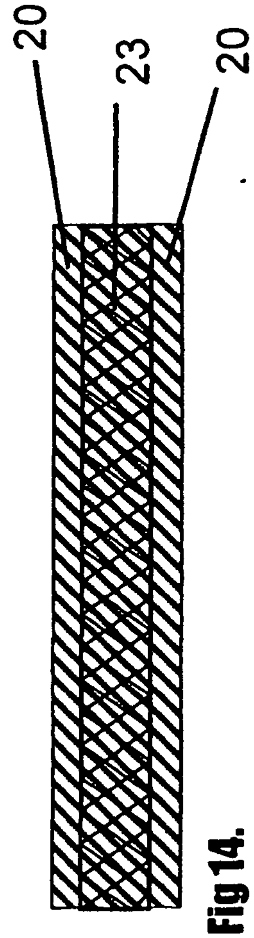


Fig 14.

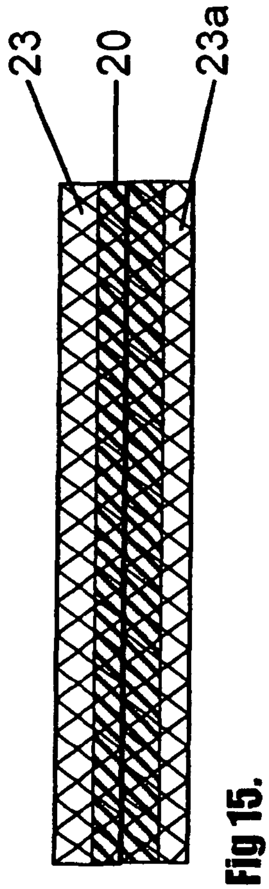

Fig 15.

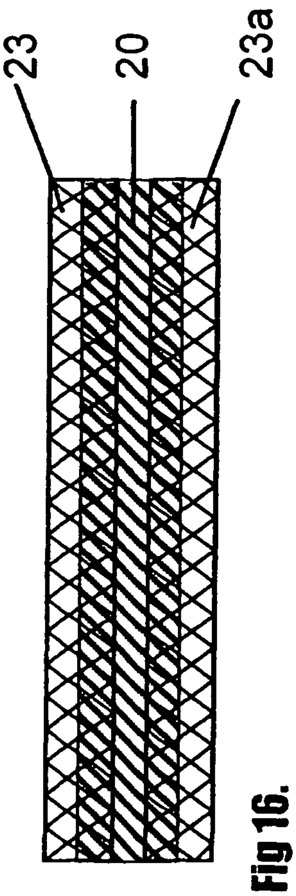

Fig 16.

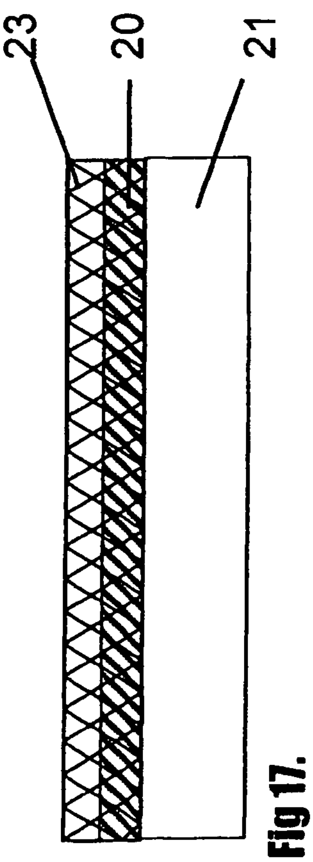

Fig 17.

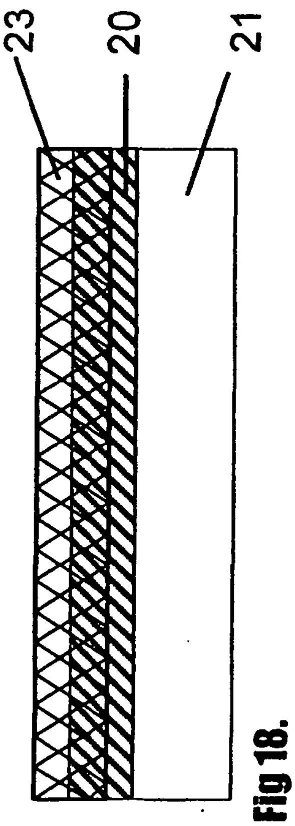

Fig 18.

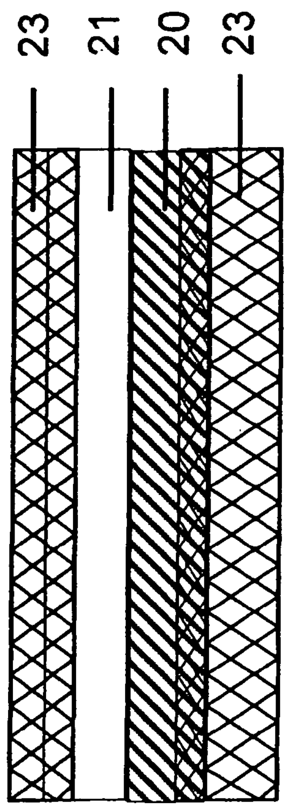

Fig 19.

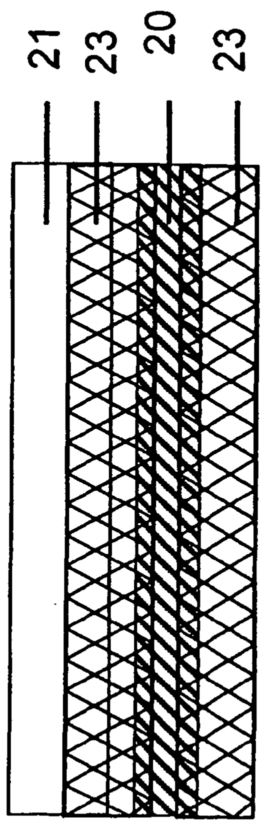

Fig 20.

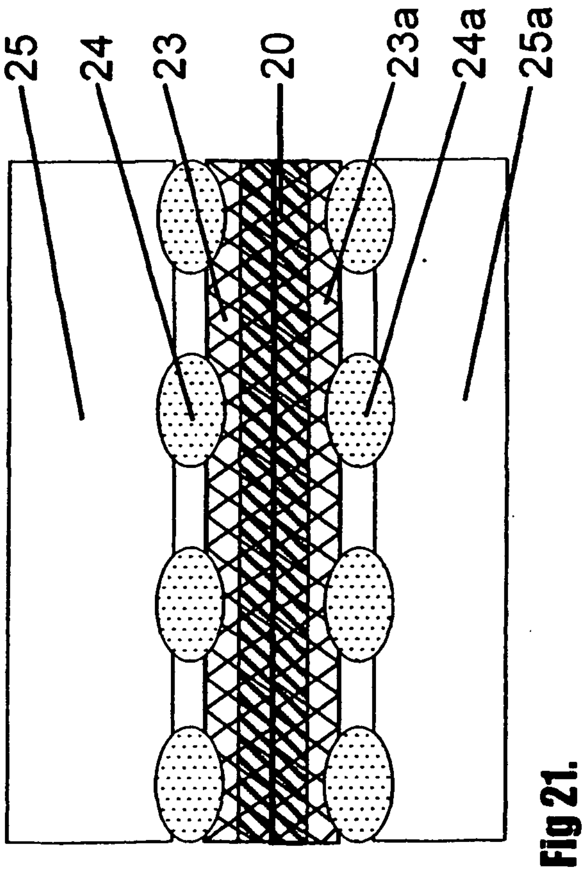


Fig 21.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4510193 A, Blucher
- US 5743775 A, Baurmeister
- US 5824405 A, White
- US 5391426 A, Wu
- US 6395383 B, Maples
- US 4515761 A
- US 4518650 A, E. I. Du Pont de Nemours
- US 5013765 A
- US 5362836 A
- US 5403675 A
- US 6509441 A
- WO 0119896 A1
- US 4824916 A
- US 6451921 B
- US 4862730 A
- WO 0225764 A1
- WO 03005474 A2
- US 4194041 A
- US 3953566 A
- US 6118218 A


### Non-patent literature cited in the description


- Encyclopedia of Polymer Science and Engineering. John Wiley and Sons
- Modern Plastics Encyclopedia. McGraw Hill
- **CRITCHLEY et al.** Heat Resistant Polymers - Technologically Useful Materials. Plenum Press, 1983
- Air-Permeable and Semi-permeable Materials Sorbent/Reactant Capacity Testing (Vapor Agent Challenge/Vapor Penetration. *U.S. Army Test and Evaluation Command, Test Operating Procedure 8-2-501,* March 1997
- Laboratory Methods for Evaluating Protective Clothing Systems Against Chemical Agents. *CRDC-SP-84010,* June 1984
- **KOMKOVA et al.** Influence Of The Nature Of Polymer Matrix And The Degree Of Sulfonation On The Properties Of Membranes. *Polymer Science, ser. A,* 2001, vol. 43 (3), 300-307
- **E. N. KOMKOVA.** Influence Of The Nature Of Polymer Matrix And The Degree Of Sulfonation On The Properties Of Membranes. *Polymer Science, ser. A,* 2001, vol. 43 (3), 300-307